# EUROPEAN PATENT SPECIFICATION

(11) **EP 4 494 043 B1**
(45) Date of publication and mention of the grant of the patent: **02.12.2026**
(21) Application number: 23706690.7
(22) Date of filing: 23.01.2023
(51) Int. Cl.: G06N 3/098, G06N 3/0455, G06N 3/044, G06N 3/0499, G06N 3/0464, G06N 3/084, G06N 3/047, H04L 41/00, H04W 72/00, H04W 80/00

(54) **FEDERATED LEARNING IN A DISAGGREGATED RADIO ACCESS NETWORK**
FÖDERIERTES LERNEN IN EINEM DISAGGREGIERTEN FUNKZUGANGSNETZWERK
APPRENTISSAGE FÉDÉRÉ DANS UN RÉSEAU D'ACCÈS RADIO DÉSAGRÉGÉ

(30) Priority: 16.03.2022 US 202217696712
(43) Date of publication of application: 22.01.2025
(73) Proprietor: QUALCOMM INCORPORATED, San Diego, California 92121-1714 (US)
(72) Inventor: BALEVI, Eren, San Diego, California 92121 (US); YOO, Taesang, San Diego, California 92121 (US); KUMAR, Rajeev, San Diego, California 92121 (US); KRISHNAN, Shankar, San Diego, California 92121 (US); GHOLMIEH, Aziz, San Diego, California 92121 (US); ZHU, Xipeng, San Diego, California 92121 (US)
(74) Representative: Bardehle Pagenberg Partnerschaft mbB Patentanwälte Rechtsanwälte
(86) International application number: PCT/US2023/061110
(87) International publication number: WO 2023/177933

(56) References cited:
- JAEMIN SHIN ET AL: "Sample Selection with Deadline Control for Efficient Federated Learning on Heterogeneous Clients", ARXIV.ORG, CORNELL UNIVERSITY LIBRARY, 201 OLIN LIBRARY CORNELL UNIVERSITY ITHACA, NY 14853, 5 January 2022 (2022-01-05), XP091133117
- LATIF U KHAN ET AL: "Federated Learning for Internet of Things: Recent Advances, Taxonomy, and Open Challenges", ARXIV.ORG, CORNELL UNIVERSITY LIBRARY, 201 OLIN LIBRARY CORNELL UNIVERSITY ITHACA, NY 14853, 18 June 2021 (2021-06-18), XP081976098
- ZHAO ZHONGYUAN ET AL: "Federated-Learning-Enabled Intelligent Fog Radio Access Networks: Fundamental Theory, Key Techniques, and Future Trends", IEEE WIRELESS COMMUNICATIONS, COORDINATED SCIENCE LABORATORY; DEPT. ELECTRICAL AND COMPUTER ENGINEERING; UNIVERSITY OF ILLINOIS AT URBANA-CHAMPAIGN, US, vol. 27, no. 2, 1 April 2020 (2020-04-01), pages 22 - 28, XP011786146, ISSN: 1536-1284, [retrieved on 20200501], DOI: 10.1109/MWC.001.1900370

## Description

### FIELD OF THE DISCLOSURE

The present disclosure generally relates to wireless communications. For example, aspects of the present disclosure relate to systems and techniques for implementing federated learning in a disaggregated radio access network.

### BACKGROUND OF THE DISCLOSURE

Wireless communications systems are deployed to provide various telecommunications and data services, including telephony, video, data, messaging, and broadcasts. Broadband wireless communications systems have developed through various generations, including a first-generation analog wireless phone service (1G), a second-generation (2G) digital wireless phone service (including interim 2.5G networks), a third-generation (3G) high speed data, Internet-capable wireless device, and a fourth-generation (4G) service (e.g., Long-Term Evolution (LTE), WiMax). Examples of wireless communications systems include code division multiple access (CDMA) systems, time division multiple access (TDMA) systems, frequency division multiple access (FDMA) systems, orthogonal frequency division multiple access (OFDMA) systems, Global System for Mobile communication (GSM) systems, etc. Other wireless communications technologies include 802.11 Wi-Fi, Bluetooth, among others.

A fifth-generation (5G) mobile standard calls for higher data transfer speeds, greater number of connections, and better coverage, among other improvements. The 5G standard (also referred to as "New Radio" or "NR"), according to Next Generation Mobile Networks Alliance, is designed to provide data rates of several tens of megabits per second to each of tens of thousands of users, with 1 gigabit per second to tens of workers on an office floor. Several hundreds of thousands of simultaneous connections should be supported in order to support large sensor deployments. Consequently, the spectral efficiency of 5G mobile communications should be significantly enhanced compared to the current 4G/LTE standard. Furthermore, signaling efficiencies should be enhanced and latency should be substantially reduced compared to current standards.

Aspects of 5G networks may be implemented in an aggregated or disaggregated architecture. In some cases, an aggregated base station may be configured to utilize a radio protocol stack that is physically or logically integrated within a single radio access network (RAN) node. In some examples, a disaggregated base station may be configured to utilize a protocol stack that is physically or logically distributed among two or more units. JAEMIN SHIN ET AL: "Sample Selection with Deadline Control for Efficient Federated Learning on Heterogeneous Clients", 5 January 2022 relates to sample selection with deadline control for efficient federated learning on heterogeneous clients. LATIF U KHAN ET AL: "Federated Learning for Internet of Things: Recent Advances, Taxonomy, and Open Challenges", 18 June 2021 relates to federated learning for internet of things. ZHAO ZHONGYUAN ET AL: "Federated-Learning-Enabled Intelligent Fog Radio Access Networks: Fundamental Theory, Key Techniques, and Future Trends", 1 April 2020 relates to federated-learning-enabled intelligent fog radio access networks.

### SUMMARY

The invention is defined in the independent claims. Preferred embodiments are subject of the dependent claims.

In some aspects, the apparatus is or is part of a base station (e.g., a 3GPP gNodeB (gNB) for 5G/NR, a 3GPP eNodeB (eNB) for LTE, a central unit (CU), a distributed unit (DU), a radio unit (RU), a Near-Real Time (Near-RT) RAN Intelligent Controller (RIC), or a Non-Real Time (Non-RT) RIC, a Wi-Fi access point (AP), or other base station). In some aspects, the apparatus includes a transceiver configured to transmit and/or receive radio frequency (RF) signals. In some aspects, the processor includes a neural processing unit (NPU), a central processing unit (CPU), a graphics processing unit (GPU), or other processing device or component.

Other objects and advantages associated with the aspects disclosed herein will be apparent to those skilled in the art based on the accompanying drawings and detailed description.

### BRIEF DESCRIPTION OF THE DRAWINGS

The accompanying drawings are presented to aid in the description of various aspects of the disclosure and are provided for illustration of the aspects and not limitation thereof.
FIG. 1 is a block diagram illustrating an example of a wireless communication network, in accordance with some examples;
FIG. 2 is a diagram illustrating a design of a base station and a User Equipment (UE) device that enable transmission and processing of signals exchanged between the UE and the base station, in accordance with some examples;
FIG. 3 is a diagram illustrating an example of a disaggregated base station, in accordance with some examples;
FIG. 4 is a block diagram illustrating components of a user equipment, in accordance with some examples;
FIG. 5 is a diagram illustrating an example machine learning model, in accordance with some examples;
FIG. 6 is a flow chart illustrating an example of a process of training a machine learning algorithm, in accordance with some examples;
FIG. 7 is a block diagram illustrating another example of a wireless communication network, in accordance with some examples;
FIG. 8 is a sequence diagram illustrating an example for performing federated learning in a disaggregated radio access network (RAN), in accordance with some examples;
FIG. 9 is a flow diagram illustrating an example of a process for performing federated learning in a disaggregated RAN, in accordance with some examples; and
FIG. 10 is a block diagram illustrating an example of a computing system, in accordance with some examples.

### DETAILED DESCRIPTION

Certain aspects and embodiments of this disclosure are provided below for illustration purposes. Additionally, well-known elements of the disclosure will not be described in detail or will be omitted so as not to obscure the relevant details of the disclosure. Some of the aspects and embodiments described herein may be applied independently and some of them may be applied in combination as would be apparent to those of skill in the art. In the following description, for the purposes of explanation, specific details are set forth in order to provide a thorough understanding of embodiments of the application. However, it will be apparent that various embodiments may be practiced without these specific details. The figures and description are not intended to be restrictive.

Wireless communication networks are deployed to provide various communication services, such as voice, video, packet data, messaging, broadcast, and the like. A wireless communication network may support both access links and sidelinks for communication between wireless devices. An access link may refer to any communication link between a client device (e.g., a user equipment (UE), a station (STA), or other client device) and a base station (e.g., a 3GPP gNodeB (gNB) for 5G/NR, a 3GPP eNodeB (eNB) for LTE, a Wi-Fi access point (AP), or other base station) or a component of a disaggregated base station (e.g., a central unit, a distributed unit, and/or a radio unit). In one example, an access link between a UE and a 3GPP gNB can be over a Uu interface. In some cases, an access link may support uplink signaling, downlink signaling, connection procedures, etc.

In some aspects, one or more entities in a wireless network may be configured to train a machine learning model. For example, centralized training may be implemented using a single computing device or apparatus (e.g., a server) that can store the machine learning model (e.g., neural network 500) and the training data. In some cases, centralized training may require a server having significant computational resources. In some examples, centralized training can take a significant amount of time to complete.

In another example, distributed training may be implemented using a centralized parameter server (e.g., under the control of a centralized node) and multiple computing devices that can each perform a portion of the computational tasks for training the machine learning model. In some aspects, the computing devices used to implement distributed training may include data centers. In some cases, distributing the training data among the computing devices may increase communication costs associated with determining batch size, distributing the training data, and/or sending parameters updates to centralized parameter server.

In some aspects, federated training may be implemented using a centralized parameter server and multiple client devices that can each perform a portion of the computational tasks for training the machine learning model. In some examples, the client devices used to implement federated training may include UEs (e.g., cell phones, IoT devices, etc.). In some cases, client devices may perform federated training using private data stored on the client device (e.g., federated training may not require sharing a training data set). In some examples, federated training may incur higher communication costs based on the number of client devices transmitting the updated machine learning model or more specifically, neural network parameter updates to the centralized parameter server. In some cases, local models trained by client devices may deviate from centralized training and/or each other because of data heterogeneity (e.g., the training data may not be independent and identically distributed (IID) among client devices).

Systems, apparatuses, processes (also referred to as methods), and computer-readable media (collectively referred to as "systems and techniques") are described herein for performing federated learning using a disaggregated radio access network (RAN). In some aspects, the systems and techniques provide the ability to aggregate model parameters updates using multiple network entities (e.g., multiple parameter servers) within a disaggregated RAN. In some cases, aggregation of model parameter updates may be performed by one or more core networks (CNs), one or more central units (CUs), one or more distributed unit (DUs), and/or one or more radio units (RU). In some examples, aggregation of model parameter updates at different network entities with different aggregation periods within the hierarchal network can reduce communication costs.

In some aspects, a network entity may determine a data heterogeneity level based on data used to train the machine learning model. In some instances, the data heterogeneity level may be based on model parameter updates provided to a network entity. In some cases, the data heterogeneity level can be used to determine an aggregation period within a communication round or a local epoch that can be used to configure the number of gradient descent steps taken in training the model locally in each client device. In some examples, different network entities can be associated with different aggregation periods. For example, two or more network entities on a same hierarchical level may determine the same or different aggregation periods. In some examples, increasing the aggregation period may decrease the communication cost for training the machine learning model.

In some cases, aggregation of model parameter updates can be performed using over-the-air (OTA) aggregation. For example, OTA aggregation can be implemented by configuring multiple UEs to transmit model parameter updates using the same transmission resources in a shared channel with analog transmission. In some cases, the shared channel can include a Physical Uplink Shared Channel (PUSCH).

In some examples, network entities may be configured to aggregate model parameter updates corresponding to one or more layers of the machine learning model. For example, a network entity (e.g., an RU) corresponding to a first hierarchical level in the RAN may be configured to aggregate model parameter corresponding to the fourth layer of a four layer machine learning model. In another example, a network entity (e.g., a CN) corresponding to a fourth level in the RAN may be configured to aggregate model parameters corresponding to the first layer of a four layer machine learning model.

As used herein, the terms "user equipment" (UE) and "network entity" are not intended to be specific or otherwise limited to any particular radio access technology (RAT), unless otherwise noted. In general, a UE may be any wireless communication device (e.g., a mobile phone, router, tablet computer, laptop computer, and/or tracking device, etc.), wearable (e.g., smartwatch, smart-glasses, wearable ring, and/or an extended reality (XR) device such as a virtual reality (VR) headset, an augmented reality (AR) headset or glasses, or a mixed reality (MR) headset), vehicle (e.g., automobile, motorcycle, bicycle, etc.), and/or Internet of Things (IoT) device, etc., used by a user to communicate over a wireless communications network. A UE may be mobile or may (e.g., at certain times) be stationary, and may communicate with a radio access network (RAN). As used herein, the term "UE" may be referred to interchangeably as an "access terminal" or "AT," a "client device," a "wireless device," a "subscriber device," a "subscriber terminal," a "subscriber station," a "user terminal" or "UT," a "mobile device," a "mobile terminal," a "mobile station," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on IEEE 802.11 communication standards, etc.) and so on.

A network entity can be implemented in an aggregated or monolithic base station architecture, or alternatively, in a disaggregated base station architecture, and may include one or more of a central unit (CU), a distributed unit (DU), a radio unit (RU), a Near-Real Time (Near-RT) RAN Intelligent Controller (RIC), or a Non-Real Time (Non-RT) RIC. A base station (e.g., with an aggregated/monolithic base station architecture or disaggregated base station architecture) may operate according to one of several RATs in communication with UEs depending on the network in which it is deployed, and may be alternatively referred to as an access point (AP), a network node, a NodeB (NB), an evolved NodeB (eNB), a next generation eNB (ng-eNB), a New Radio (NR) Node B (also referred to as a gNB or gNodeB), etc. A base station may be used primarily to support wireless access by UEs, including supporting data, voice, and/or signaling connections for the supported UEs. In some systems, a base station may provide edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, or a forward traffic channel, etc.). The term traffic channel (TCH), as used herein, can refer to either an uplink, reverse or downlink, and/or a forward traffic channel.

The term "network entity" or "base station" (e.g., with an aggregated/monolithic base station architecture or disaggregated base station architecture) may refer to a single physical transmit receive point (TRP) or to multiple physical TRPs that may or may not be co-located. For example, where the term "network entity" or "base station" refers to a single physical TRP, the physical TRP may be an antenna of the base station corresponding to a cell (or several cell sectors) of the base station. Where the term "network entity" or "base station" refers to multiple co-located physical TRPs, the physical TRPs may be an array of antennas (e.g., as in a multiple-input multiple-output (MIMO) system or where the base station employs beamforming) of the base station. Where the term "base station" refers to multiple non-co-located physical TRPs, the physical TRPs may be a distributed antenna system (DAS) (a network of spatially separated antennas connected to a common source via a transport medium) or a remote radio head (RRH) (a remote base station connected to a serving base station). Alternatively, the non-co-located physical TRPs may be the serving base station receiving the measurement report from the UE and a neighbor base station whose reference radio frequency (RF) signals (or simply "reference signals") the UE is measuring. Because a TRP is the point from which a base station transmits and receives wireless signals, as used herein, references to transmission from or reception at a base station are to be understood as referring to a particular TRP of the base station.

In some implementations that support positioning of UEs, a network entity or base station may not support wireless access by UEs (e.g., may not support data, voice, and/or signaling connections for UEs), but may instead transmit reference signals to UEs to be measured by the UEs, and/or may receive and measure signals transmitted by the UEs. Such a base station may be referred to as a positioning beacon (e.g., when transmitting signals to UEs) and/or as a location measurement unit (e.g., when receiving and measuring signals from UEs).

An RF signal comprises an electromagnetic wave of a given frequency that transports information through the space between a transmitter and a receiver. As used herein, a transmitter may transmit a single "RF signal" or multiple "RF signals" to a receiver. However, the receiver may receive multiple "RF signals" corresponding to each transmitted RF signal due to the propagation characteristics of RF signals through multipath channels. The same transmitted RF signal on different paths between the transmitter and receiver may be referred to as a "multipath" RF signal. As used herein, an RF signal may also be referred to as a "wireless signal" or simply a "signal" where it is clear from the context that the term "signal" refers to a wireless signal or an RF signal.

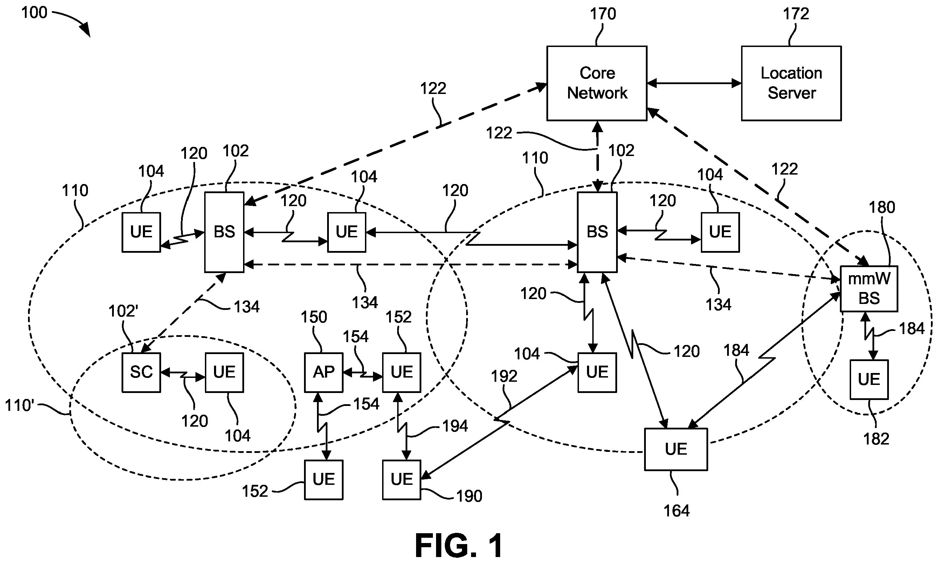

Various aspects of the systems and techniques described herein will be discussed below with respect to the figures. According to various aspects, FIG. 1 illustrates an example of a wireless communications system 100. The wireless communications system 100 (which may also be referred to as a wireless wide area network (WWAN)) can include various base stations 102 and various UEs 104. In some aspects, the base stations 102 may also be referred to as "network entities" or "network nodes." One or more of the base stations 102 can be implemented in an aggregated or monolithic base station architecture. Additionally, or alternatively, one or more of the base stations 102 can be implemented in a disaggregated base station architecture, and may include one or more of a central unit (CU), a distributed unit (DU), a radio unit (RU), a Near-Real Time (Near-RT) RAN Intelligent Controller (RIC), or a Non-Real Time (Non-RT) RIC. The base stations 102 can include macro cell base stations (high power cellular base stations) and/or small cell base stations (low power cellular base stations). In an aspect, the macro cell base station may include eNBs and/or ng-eNBs where the wireless communications system 100 corresponds to a long term evolution (LTE) network, or gNBs where the wireless communications system 100 corresponds to a NR network, or a combination of both, and the small cell base stations may include femtocells, picocells, microcells, etc.

The base stations 102 may collectively form a RAN and interface with a core network 170 (e.g., an evolved packet core (EPC) or a 5G core (5GC)) through backhaul links 122, and through the core network 170 to one or more location servers 172 (which may be part of core network 170 or may be external to core network 170). In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC or 5GC) over backhaul links 134, which may be wired and/or wireless.

The base stations 102 may wirelessly communicate with the UEs 104. Each of the base stations 102 may provide communication coverage for a respective geographic coverage area 110. In an aspect, one or more cells may be supported by a base station 102 in each coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCI), a virtual cell identifier (VCI), a cell global identifier (CGI)) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. Because a cell is supported by a specific base station, the term "cell" may refer to either or both of the logical communication entity and the base station that supports it, depending on the context. In addition, because a TRP is typically the physical transmission point of a cell, the terms "cell" and "TRP" may be used interchangeably. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell base station 102' may have a coverage area 110' that substantially overlaps with the coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include uplink (also referred to as reverse link) transmissions from a UE 104 to a base station 102 and/or downlink (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to downlink and uplink (e.g., more or less carriers may be allocated for downlink than for uplink).

The wireless communications system 100 may further include a WLAN AP 150 in communication with WLAN stations (STAs) 152 via communication links 154 in an unlicensed frequency spectrum (e.g., 5 Gigahertz (GHz)). When communicating in an unlicensed frequency spectrum, the WLAN STAs 152 and/or the WLAN AP 150 may perform a clear channel assessment (CCA) or listen before talk (LBT) procedure prior to communicating in order to determine whether the channel is available. In some examples, the wireless communications system 100 can include devices (e.g., UEs, etc.) that communicate with one or more UEs 104, base stations 102, APs 150, etc. utilizing the ultra-wideband (UWB) spectrum. The UWB spectrum can range from 3.1 to 10.5 GHz.

The small cell base station 102' may operate in a licensed and/or an unlicensed frequency spectrum. When operating in an unlicensed frequency spectrum, the small cell base station 102' may employ LTE or NR technology and use the same 5 GHz unlicensed frequency spectrum as used by the WLAN AP 150. The small cell base station 102', employing LTE and/or 5G in an unlicensed frequency spectrum, may boost coverage to and/or increase capacity of the access network. NR in unlicensed spectrum may be referred to as NR-U. LTE in an unlicensed spectrum may be referred to as LTE-U, licensed assisted access (LAA), or MulteFire.

The wireless communications system 100 may further include a millimeter wave (mmW) base station 180 that may operate in mmW frequencies and/or near mmW frequencies in communication with a UE 182. The mmW base station 180 may be implemented in an aggregated or monolithic base station architecture, or alternatively, in a disaggregated base station architecture (e.g., including one or more of a CU, a DU, a RU, a Near-RT RIC, or a Non-RT RIC). Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW and/or near mmW radio frequency band have high path loss and a relatively short range. The mmW base station 180 and the UE 182 may utilize beamforming (transmit and/or receive) over an mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

In some aspects relating to 5G, the frequency spectrum in which wireless network nodes or entities (e.g., base stations 102/180, UEs 104/182) operate is divided into multiple frequency ranges, FR1 (from 450 to 6000 Megahertz (MHz)), FR2 (from 24250 to 52600 MHz), FR3 (above 52600 MHz), and FR4 (between FR1 and FR2). In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels and may be a carrier in a licensed frequency (however, this is not always the case). A secondary carrier is a carrier operating on a second frequency (e.g., FR2) that may be configured once the RRC connection is established between the UE 104 and the anchor carrier and that may be used to provide additional radio resources. In some cases, the secondary carrier may be a carrier in an unlicensed frequency. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency and/or component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). In carrier aggregation, the base stations 102 and/or the UEs 104 may use spectrum up to Y MHz (e.g., 5, 10, 15, 20, 100 MHz) bandwidth per carrier up to a total of Yx MHz (x component carriers) for transmission in each direction. The component carriers may or may not be adjacent to each other on the frequency spectrum. Allocation of carriers may be asymmetric with respect to the downlink and uplink (e.g., more or less carriers may be allocated for downlink than for uplink). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

In order to operate on multiple carrier frequencies, a base station 102 and/or a UE 104 can be equipped with multiple receivers and/or transmitters. For example, a UE 104 may have two receivers, "Receiver 1" and "Receiver 2," where "Receiver 1" is a multi-band receiver that can be tuned to band (i.e., carrier frequency) 'X' or band 'Y,' and "Receiver 2" is a one-band receiver tuneable to band 'Z' only. In this example, if the UE 104 is being served in band 'X,' band 'X' would be referred to as the PCell or the active carrier frequency, and "Receiver 1" would need to tune from band 'X' to band 'Y' (an SCell) in order to measure band 'Y' (and vice versa). In contrast, whether the UE 104 is being served in band 'X' or band 'Y,' because of the separate "Receiver 2," the UE 104 can measure band 'Z' without interrupting the service on band 'X' or band 'Y.'

The wireless communications system 100 may further include a UE 164 that may communicate with a macro cell base station 102 over a communication link 120 and/or the mmW base station 180 over an mmW communication link 184. For example, the macro cell base station 102 may support a PCell and one or more SCells for the UE 164 and the mmW base station 180 may support one or more SCells for the UE 164.

The wireless communications system 100 may further include one or more UEs, such as UE 190, that connects indirectly to one or more communication networks via one or more device-to-device (D2D) peer-to-peer (P2P) links (referred to as "sidelinks"). In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), Wi-Fi Direct (Wi-Fi-D), Bluetooth^{®}, and so on.

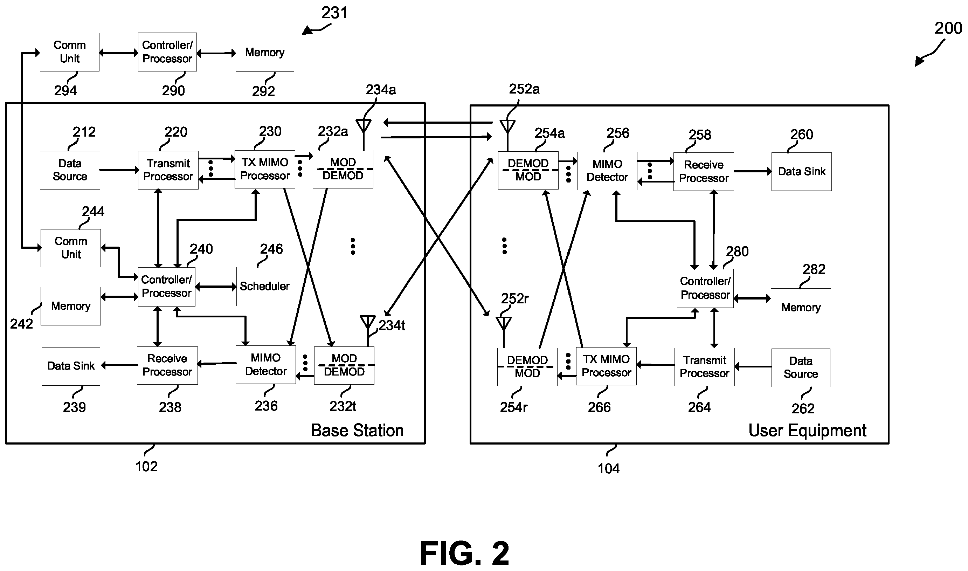

FIG. 2 shows a block diagram of a design of a base station 102 and a UE 104 that enable transmission and processing of signals exchanged between the UE and the base station, in accordance with some aspects of the present disclosure. Design 200 includes components of a base station 102 and a UE 104, which may be one of the base stations 102 and one of the UEs 104 in FIG. 1. Base station 102 may be equipped with T antennas 234*a* through 234t, and UE 104 may be equipped with R antennas 252*a* through 252*r*, where in general T≥1 and R≥1.

At base station 102, a transmit processor 220 may receive data from a data source 212 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 220 may also process system information (e.g., for semi-static resource partitioning information (SRPI) and/or the like) and control information (e.g., CQI requests, grants, upper layer signaling, and/or the like) and provide overhead symbols and control symbols. Transmit processor 220 may also generate reference symbols for reference signals (e.g., the cell-specific reference signal (CRS)) and synchronization signals (e.g., the primary synchronization signal (PSS) and secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide T output symbol streams to T modulators (MODs) 232*a* through 232*t.* The modulators 232*a* through 232*t* are shown as a combined modulator-demodulator (MOD-DEMOD). In some cases, the modulators and demodulators can be separate components. Each modulator of the modulators 232a to 232t may process a respective output symbol stream, e.g., for an orthogonal frequency-division multiplexing (OFDM) scheme and/or the like, to obtain an output sample stream. Each modulator of the modulators 232a to 232t may further process (e.g., convert to analog, amplify, filter, and upconvert) the output sample stream to obtain a downlink signal. T downlink signals may be transmitted from modulators 232*a* to 232*t* via T antennas 234*a* through 234t, respectively. According to certain aspects described in more detail below, the synchronization signals can be generated with location encoding to convey additional information.

At UE 104, antennas 252*a* through 252*r* may receive the downlink signals from base station 102 and/or other base stations and may provide received signals to demodulators (DE-MODs) 254*a* through 254*r*, respectively. The demodulators 254*a* through 254*r* are shown as a combined modulator-demodulator (MOD-DEMOD). In some cases, the modulators and demodulators can be separate components. Each demodulator of the demodulators 254*a* through 254*r* may condition (e.g., filter, amplify, downconvert, and digitize) a received signal to obtain input samples. Each demodulator of the demodulators 254*a* through 254r may further process the input samples (e.g., for OFDM and/or the like) to obtain received symbols. A MIMO detector 256 may obtain received symbols from all R demodulators 254*a* through 254r, perform MIMO detection on the received symbols if applicable, and provide detected symbols. A receive processor 258 may process (e.g., demodulate and decode) the detected symbols, provide decoded data for UE 104 to a data sink 260, and provide decoded control information and system information to a controller/processor 280. A channel processor may determine reference signal received power (RSRP), received signal strength indicator (RSSI), reference signal received quality (RSRQ), channel quality indicator (CQI), and/or the like.

On the uplink, at UE 104, a transmit processor 264 may receive and process data from a data source 262 and control information (e.g., for reports comprising RSRP, RSSI, RSRQ, CQI, and/or the like) from controller/processor 280. Transmit processor 264 may also generate reference symbols for one or more reference signals (e.g., based at least in part on a beta value or a set of beta values associated with the one or more reference signals). The symbols from transmit processor 264 may be precoded by a TX-MIMO processor 266 if application, further processed by modulators 254*a* through 254*r* (e.g., for DFT-s-OFDM, CP-OFDM, and/or the like), and transmitted to base station 102. At base station 102, the uplink signals from UE 104 and other UEs may be received by antennas 234*a* through 234t, processed by demodulators 232*a* through 232*t,* detected by a MIMO detector 236 if applicable, and further processed by a receive processor 238 to obtain decoded data and control information sent by UE 104. Receive processor 238 may provide the decoded data to a data sink 239 and the decoded control information to controller (processor) 240. Base station 102 may include communication unit 244 and communicate to a network controller 231 via communication unit 244. Network controller 231 may include communication unit 294, controller/processor 290, and memory 292.

In some aspects, one or more components of UE 104 may be included in a housing. Controller 240 of base station 102, controller/processor 280 of UE 104, and/or any other component(s) of FIG. 2 may perform one or more techniques associated with implicit UCI beta value determination for NR.

Memories 242 and 282 may store data and program codes for the base station 102 and the UE 104, respectively. A scheduler 246 may schedule UEs for data transmission on the downlink, uplink, and/or sidelink.

In some aspects, deployment of communication systems, such as 5G new radio (NR) systems, may be arranged in multiple manners with various components or constituent parts. In a 5G NR system, or network, a network node, a network entity, a mobility element of a network, a radio access network (RAN) node, a core network node, a network element, or a network equipment, such as a base station (BS), or one or more units (or one or more components) performing base station functionality, may be implemented in an aggregated or disaggregated architecture. For example, a BS (such as a Node B (NB), evolved NB (eNB), NR BS, 5G NB, access point (AP), a transmit receive point (TRP), or a cell, etc.) may be implemented as an aggregated base station (also known as a standalone BS or a monolithic BS) or a disaggregated base station.

An aggregated base station may be configured to utilize a radio protocol stack that is physically or logically integrated within a single RAN node. A disaggregated base station may be configured to utilize a protocol stack that is physically or logically distributed among two or more units (such as one or more central or centralized units (CUs), one or more distributed units (DUs), or one or more radio units (RUs)). In some aspects, a CU may be implemented within a RAN node, and one or more DUs may be co-located with the CU, or alternatively, may be geographically or virtually distributed throughout one or multiple other RAN nodes. The DUs may be implemented to communicate with one or more RUs. Each of the CU, DU and RU also can be implemented as virtual units, i.e., a virtual central unit (VCU), a virtual distributed unit (VDU), or a virtual radio unit (VRU).

Base station-type operation or network design may consider aggregation characteristics of base station functionality. For example, disaggregated base stations may be utilized in an integrated access backhaul (IAB) network, an open radio access network (O-RAN (such as the network configuration sponsored by the O-RAN Alliance)), or a virtualized radio access network (vRAN, also known as a cloud radio access network (C-RAN)). Disaggregation may include distributing functionality across two or more units at various physical locations, as well as distributing functionality for at least one unit virtually, which can enable flexibility in network design. The various units of the disaggregated base station, or disaggregated RAN architecture, can be configured for wired or wireless communication with at least one other unit.

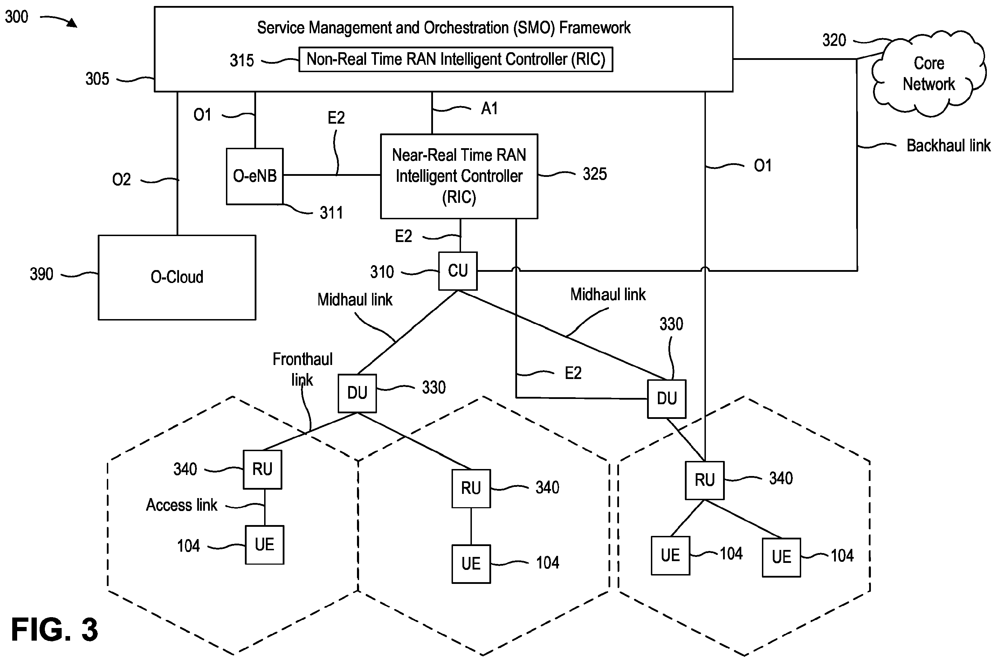

FIG. 3 shows a diagram illustrating an example disaggregated base station 300 architecture. The disaggregated base station 300 architecture may include one or more central units (CUs) 310 that can communicate directly with a core network 320 via a backhaul link, or indirectly with the core network 320 through one or more disaggregated base station units (such as a Near-Real Time (Near-RT) RAN Intelligent Controller (RIC) 325 via an E2 link, or a Non-Real Time (Non-RT) RIC 315 associated with a Service Management and Orchestration (SMO) Framework 305, or both). A CU 310 may communicate with one or more distributed units (DUs) 330 via respective midhaul links, such as an F1 interface. The DUs 330 may communicate with one or more radio units (RUs) 340 via respective fronthaul links. The RUs 340 may communicate with respective UEs 104 via one or more radio frequency (RF) access links. In some implementations, the UE 104 may be simultaneously served by multiple RUs 340.

Each of the units, e.g., the CUs 310, the DUs 330, the RUs 340, as well as the Near-RT RICs 325, the Non-RT RICs 315 and the SMO Framework 305, may include one or more interfaces or be coupled to one or more interfaces configured to receive or transmit signals, data, or information (collectively, signals) via a wired or wireless transmission medium. Each of the units, or an associated processor or controller providing instructions to the communication interfaces of the units, can be configured to communicate with one or more of the other units via the transmission medium. For example, the units can include a wired interface configured to receive or transmit signals over a wired transmission medium to one or more of the other units. Additionally, the units can include a wireless interface, which may include a receiver, a transmitter or transceiver (such as a radio frequency (RF) transceiver), configured to receive or transmit signals, or both, over a wireless transmission medium to one or more of the other units.

In some aspects, the CU 310 may host one or more higher layer control functions. Such control functions can include radio resource control (RRC), packet data convergence protocol (PDCP), service data adaptation protocol (SDAP), or the like. Each control function can be implemented with an interface configured to communicate signals with other control functions hosted by the CU 310. The CU 310 may be configured to handle user plane functionality (i.e., Central Unit - User Plane (CU-UP)), control plane functionality (i.e., Central Unit - Control Plane (CU-CP)), or a combination thereof. In some implementations, the CU 310 can be logically split into one or more CU-UP units and one or more CU-CP units. The CU-UP unit can communicate bidirectionally with the CU-CP unit via an interface, such as the E1 interface when implemented in an O-RAN configuration. The CU 310 can be implemented to communicate with the DU 330, as necessary, for network control and signaling.

The DU 330 may correspond to a logical unit that includes one or more base station functions to control the operation of one or more RUs 340. In some aspects, the DU 330 may host one or more of a radio link control (RLC) layer, a medium access control (MAC) layer, and one or more high physical (PHY) layers (such as modules for forward error correction (FEC) encoding and decoding, scrambling, modulation and demodulation, or the like) depending, at least in part, on a functional split, such as those defined by the 3rd Generation Partnership Project (3GPP). In some aspects, the DU 330 may further host one or more low PHY layers. Each layer (or module) can be implemented with an interface configured to communicate signals with other layers (and modules) hosted by the DU 330, or with the control functions hosted by the CU 310.

Lower-layer functionality can be implemented by one or more RUs 340. In some deployments, an RU 340, controlled by a DU 330, may correspond to a logical node that hosts RF processing functions, or low-PHY layer functions (such as performing fast Fourier transform (FFT), inverse FFT (iFFT), digital beamforming, physical random access channel (PRACH) extraction and filtering, or the like), or both, based at least in part on the functional split, such as a lower layer functional split. In such an architecture, the RU(s) 340 can be implemented to handle over the air (OTA) communication with one or more UEs 104. In some implementations, real-time and non-real-time aspects of control and user plane communication with the RU(s) 340 can be controlled by the corresponding DU 330. In some scenarios, this configuration can enable the DU(s) 330 and the CU 310 to be implemented in a cloud-based RAN architecture, such as a vRAN architecture.

The SMO Framework 305 may be configured to support RAN deployment and provisioning of non-virtualized and virtualized network elements. For non-virtualized network elements, the SMO Framework 305 may be configured to support the deployment of dedicated physical resources for RAN coverage requirements which may be managed via an operations and maintenance interface (such as an O1 interface). For virtualized network elements, the SMO Framework 305 may be configured to interact with a cloud computing platform (such as an open cloud (O-Cloud) 390) to perform network element life cycle management (such as to instantiate virtualized network elements) via a cloud computing platform interface (such as an O2 interface). Such virtualized network elements can include, but are not limited to, CUs 310, DUs 330, RUs 340 and Near-RT RICs 325. In some implementations, the SMO Framework 305 can communicate with a hardware aspect of a 4G RAN, such as an open eNB (O-eNB) 311, via an O1 interface. Additionally, in some implementations, the SMO Framework 305 can communicate directly with one or more RUs 340 via an O1 interface. The SMO Framework 305 also may include a Non-RT RIC 315 configured to support functionality of the SMO Framework 305.

The Non-RT RIC 315 may be configured to include a logical function that enables non-real-time control and optimization of RAN elements and resources, Artificial Intelligence/Machine Learning (AI/ML) workflows including model training and updates, or policy-based guidance of applications/features in the Near-RT RIC 325. The Non-RT RIC 315 may be coupled to or communicate with (such as via an A1 interface) the Near-RT RIC 325. The Near-RT RIC 325 may be configured to include a logical function that enables near-real-time control and optimization of RAN elements and resources via data collection and actions over an interface (such as via an E2 interface) connecting one or more CUs 310, one or more DUs 330, or both, as well as an O-eNB, with the Near-RT RIC 325.

In some implementations, to generate AI/ML models to be deployed in the Near-RT RIC 325, the Non-RT RIC 315 may receive parameters or external enrichment information from external servers. Such information may be utilized by the Near-RT RIC 325 and may be received at the SMO Framework 305 or the Non-RT RIC 315 from non-network data sources or from network functions. In some examples, the Non-RT RIC 315 or the Near-RT RIC 325 may be configured to tune RAN behavior or performance. For example, the Non-RT RIC 315 may monitor long-term trends and patterns for performance and employ AI/ML models to perform corrective actions through the SMO Framework 305 (such as reconfiguration via O1) or via creation of RAN management policies (such as A1 policies).

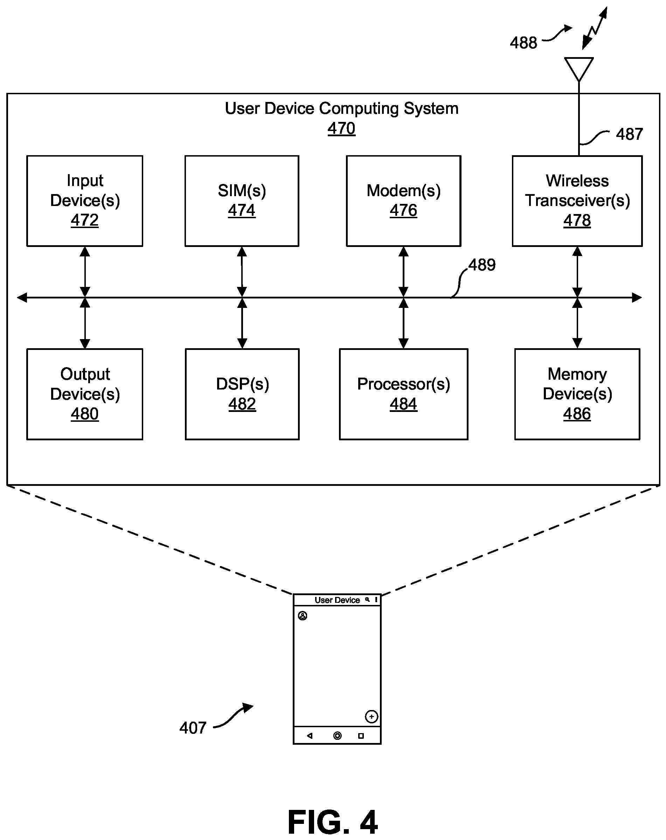

FIG. 4 illustrates an example of a computing system 470 of a wireless device 407. The wireless device 407 can include a client device such as a UE (e.g., UE 104, UE 152, UE 190) or other type of device (e.g., a station (STA) configured to communication using a Wi-Fi interface) that can be used by an end-user. For example, the wireless device 407 can include a mobile phone, router, tablet computer, laptop computer, tracking device, wearable device (e.g., a smart watch, glasses, an extended reality (XR) device such as a virtual reality (VR), augmented reality (AR) or mixed reality (MR) device, etc.), Internet of Things (IoT) device, access point, and/or another device that is configured to communicate over a wireless communications network. The computing system 470 includes software and hardware components that can be electrically or communicatively coupled via a bus 489 (or may otherwise be in communication, as appropriate). For example, the computing system 470 includes one or more processors 484. The one or more processors 484 can include one or more CPUs, ASICs, FPGAs, APs, GPUs, VPUs, NSPs, microcontrollers, dedicated hardware, any combination thereof, and/or other processing device or system. The bus 489 can be used by the one or more processors 484 to communicate between cores and/or with the one or more memory devices 486.

The computing system 470 may also include one or more memory devices 486, one or more digital signal processors (DSPs) 482, one or more subscriber identity modules (SIMs) 474, one or more modems 476, one or more wireless transceivers 478, one or more antennas 487, one or more input devices 472 (e.g., a camera, a mouse, a keyboard, a touch sensitive screen, a touch pad, a keypad, a microphone, and/or the like), and one or more output devices 480 (e.g., a display, a speaker, a printer, and/or the like).

In some aspects, computing system 470 can include one or more radio frequency (RF) interfaces configured to transmit and/or receive RF signals. In some examples, an RF interface can include components such as modem(s) 476, wireless transceiver(s) 478, and/or antennas 487. The one or more wireless transceivers 478 can transmit and receive wireless signals (e.g., signal 488) via antenna 487 from one or more other devices, such as other wireless devices, network devices (e.g., base stations such as eNBs and/or gNBs, Wi-Fi access points (APs) such as routers, range extenders or the like, etc.), cloud networks, and/or the like. In some examples, the computing system 470 can include multiple antennas or an antenna array that can facilitate simultaneous transmit and receive functionality. Antenna 487 can be an omnidirectional antenna such that radio frequency (RF) signals can be received from and transmitted in all directions. The wireless signal 488 may be transmitted via a wireless network. The wireless network may be any wireless network, such as a cellular or telecommunications network (e.g., 3G, 4G, 5G, etc.), wireless local area network (e.g., a Wi-Fi network), a Bluetooth^{™} network, and/or other network.

In some examples, the wireless signal 488 may be transmitted directly to other wireless devices using sidelink communications (e.g., using a PC5 interface, using a DSRC interface, etc.). Wireless transceivers 478 can be configured to transmit RF signals for performing sidelink communications via antenna 487 in accordance with one or more transmit power parameters that can be associated with one or more regulation modes. Wireless transceivers 478 can also be configured to receive sidelink communication signals having different signal parameters from other wireless devices.

In some examples, the one or more wireless transceivers 478 may include an RF front end including one or more components, such as an amplifier, a mixer (also referred to as a signal multiplier) for signal down conversion, a frequency synthesizer (also referred to as an oscillator) that provides signals to the mixer, a baseband filter, an analog-to-digital converter (ADC), one or more power amplifiers, among other components. The RF front-end can generally handle selection and conversion of the wireless signals 488 into a baseband or intermediate frequency and can convert the RF signals to the digital domain.

In some cases, the computing system 470 can include a coding-decoding device (or CODEC) configured to encode and/or decode data transmitted and/or received using the one or more wireless transceivers 478. In some cases, the computing system 470 can include an encryption-decryption device or component configured to encrypt and/or decrypt data (e.g., according to the AES and/or DES standard) transmitted and/or received by the one or more wireless transceivers 478.

The one or more SIMs 474 can each securely store an international mobile subscriber identity (IMSI) number and related key assigned to the user of the wireless device 407. The IMSI and key can be used to identify and authenticate the subscriber when accessing a network provided by a network service provider or operator associated with the one or more SIMs 474. The one or more modems 476 can modulate one or more signals to encode information for transmission using the one or more wireless transceivers 478. The one or more modems 476 can also demodulate signals received by the one or more wireless transceivers 478 in order to decode the transmitted information. In some examples, the one or more modems 476 can include a Wi-Fi modem, a 4G (or LTE) modem, a 5G (or NR) modem, and/or other types of modems. The one or more modems 476 and the one or more wireless transceivers 478 can be used for communicating data for the one or more SIMs 474.

The computing system 470 can also include (and/or be in communication with) one or more non-transitory machine-readable storage media or storage devices (e.g., one or more memory devices 486), which can include, without limitation, local and/or network accessible storage, a disk drive, a drive array, an optical storage device, a solid-state storage device such as a RAM and/or a ROM, which can be programmable, flash-updateable and/or the like. Such storage devices may be configured to implement any appropriate data storage, including without limitation, various file systems, database structures, and/or the like.

In various embodiments, functions may be stored as one or more computer-program products (e.g., instructions or code) in memory device(s) 486 and executed by the one or more processor(s) 484 and/or the one or more DSPs 482. The computing system 470 can also include software elements (e.g., located within the one or more memory devices 486), including, for example, an operating system, device drivers, executable libraries, and/or other code, such as one or more application programs, which may comprise computer programs implementing the functions provided by various embodiments, and/or may be designed to implement methods and/or configure systems, as described herein.

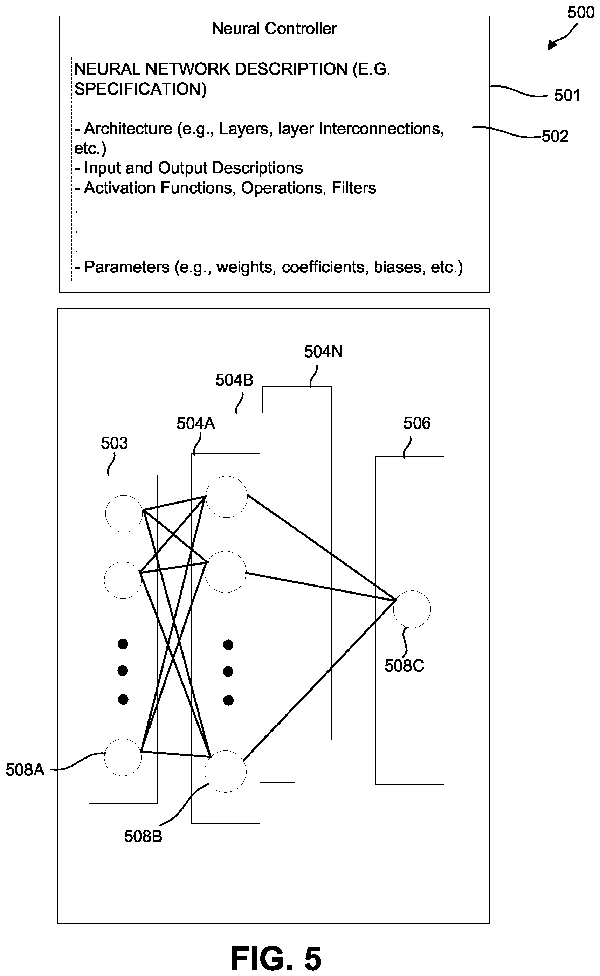

FIG. 5 illustrates an example neural architecture of a neural network 500 that can be trained using federated learning in a disaggregated radio access network (RAN), in accordance with some aspects of the present disclosure. The example neural architecture of the neural network 500 may be defined by an example neural network description 502 in neural controller 501. The neural network 500 is an example of a machine learning model that can be deployed and implemented at the base station 102, the central unit (CU) 310, the distributed unit (DU) 330, the radio unit (RU) 340, and/or the UE 104. The neural network 500 can be a feedforward neural network or any other known or to-be-developed neural network or machine learning model.

The neural network description 502 can include a full specification of the neural network 500, including the neural architecture shown in FIG. 5. For example, the neural network description 502 can include a description or specification of architecture of the neural network 500 (e.g., the layers, layer interconnections, number of nodes in each layer, etc.); an input and output description which indicates how the input and output are formed or processed; an indication of the activation functions in the neural network, the operations or filters in the neural network, etc.; neural network parameters such as weights, biases, etc.; and so forth.

The neural network 500 can reflect the neural architecture defined in the neural network description 502. The neural network 500 can include any suitable neural or deep learning type of network. In some cases, the neural network 500 can include a feed-forward neural network. In other cases, the neural network 500 can include a recurrent neural network, which can have loops that allow information to be carried across nodes while reading in input. The neural network 500 can include any other suitable neural network or machine learning model. One example includes a convolutional neural network (CNN), which includes an input layer and an output layer, with multiple hidden layers between the input and out layers. The hidden layers of a CNN include a series of hidden layers as described below, such as convolutional, nonlinear, pooling (for down-sampling), and fully connected layers. In other examples, the neural network 500 can represent any other neural or deep learning network, such as an autoencoder, a deep belief nets (DBNs), a recurrent neural network (RNN), etc.

In the non-limiting example of FIG. 5, the neural network 500 includes an input layer 503, which can receive one or more sets of input data. The input data can be any type of data (e.g., image data, video data, network parameter data, user data, etc.). The neural network 500 can include hidden layers 504A through 504N (collectively "504" hereinafter). The hidden layers 504 can include *n* number of hidden layers, where *n* is an integer greater than or equal to one. The *n* number of hidden layers can include as many layers as needed for a desired processing outcome and/or rendering intent. In one illustrative example, any one of the hidden layers 504 can include data representing one or more of the data provided at the input layer 503. The neural network 500 further includes an output layer 506 that provides an output resulting from the processing performed by hidden layers 504. The output layer 506 can provide output data based on the input data.

In the example of FIG. 5, the neural network 500 is a multi-layer neural network of interconnected nodes. Each node can represent a piece of information. Information associated with the nodes is shared among the different layers and each layer retains information as information is processed. Information can be exchanged between the nodes through node-to-node interconnections between the various layers. The nodes of the input layer 503 can activate a set of nodes in the first hidden layer 504A. For example, as shown, each input node of the input layer 503 is connected to each node of the first hidden layer 504A. The nodes of the hidden layer 504A can transform the information of each input node by applying activation functions to the information. The information derived from the transformation can then be passed to and can activate the nodes of the next hidden layer (e.g., 504B), which can perform their own designated functions. Example functions include convolutional, up-sampling, data transformation, pooling, and/or any other suitable functions. The output of hidden layer (e.g., 504B) can then activate nodes of the next hidden layer (e.g., 504N), and so on. The output of last hidden layer can activate one or more nodes of the output layer 506, at which point an output can be provided. In some cases, while nodes (e.g., nodes 508A, 508B, 508C) in the neural network 500 are shown as having multiple output lines, a node can have a single output and all lines shown as being output from a node can represent the same output value.

In some cases, each node or interconnection between nodes can have a weight that is a set of parameters derived from training the neural network 500. For example, an interconnection between nodes can represent a piece of information learned about the interconnected nodes. The interconnection can have a numeric weight that can be tuned (e.g., based on a training dataset), allowing the neural network 500 to be adaptive to inputs and able to learn as more data is processed.

The neural network 500 can be pre-trained to process the features from the data in the input layer 503 using different hidden layers 504 in order to provide the output through the output layer 506. For example, in some cases, the neural network 500 can adjust weights of nodes using a training process called backpropagation. Backpropagation can include a forward pass, a loss function, a backward pass, and a weight update. The forward pass, loss function, backward pass, and parameter update can be performed for one training iteration. The process can be repeated for a certain number of iterations for each set of training data until the weights of the layers are accurately tuned (e.g., meet a configurable threshold determined based on experiments and/or empirical studies).

In some examples, neural network 500 can be trained using centralized learning techniques. In some aspects, centralized learning can be implemented using a single computing device or apparatus (e.g., a server) that can store the machine learning model (e.g., neural network 500) and the training data. In some cases, centralized training can be performed by minimizing a loss function. In some instances, the optimization problem can be represented using the Equation (1) below, in which *f* can represent the machine learning model (e.g., neural network 500); *θ* ∈ *R^{d}* can represent the training parameters; *n* can represent the number of training samples or the number of (x: input, y: output) pairs; and where output y can be regarded as the labels for the corresponding x as follows: ${min}_{θ} f \left(θ\right) = \frac{1}{n} {\sum }_{i = 1}^{n} {f}_{i} \left(θ\right)$ (1)

In some cases, *fᵢ*(*θ*) can correspond to the loss function evaluated at training sample *i* and may be represented as follows: *fᵢ*(*θ*) *= l*(*xᵢ,yᵢ,θ*). In some aspects, mean squared error (MSE) loss may be represented as follows: ${f}_{i} \left(θ\right) = {\left‖{y}_{i}-f\left({x}_{i}, θ\right)\right‖}_{2}^{2}$.

In some aspects, the loss function can be minimized or solved using mini-batch stochastic gradient-descent (SGD). In some cases, SGD can be implemented by performing the following operation for each training round *t,* in which *µₜ* is the step size or learning rate: ${θ}_{t + 1}^{\left(c\right)} ← {θ}_{t}^{\left(c\right)} - {μ}_{t} ∇ f$ (2)

In some cases, neural network 500 can be trained using distributed training techniques. In some aspects, distributed training can be implemented using multiple computing devices (e.g., worker nodes) that can each perform a portion of the computational tasks for training the machine learning model. In some examples, each worker node can train the same machine learning model (e.g., neural network 500) using an assigned local training dataset. In some cases, the machine learning model can be optimized by combining the machine learning parameters from each of the worker nodes.

In one illustrative example, distributed training can be performed by dividing *n* training samples among *K* worker nodes, as follows: ${F}_{1} \left(θ\right) , {n}_{1} \left[worker 1\right] … {F}_{K} \left(θ\right) , {n}_{K} \left[worker K\right] ; \left({n}_{1}+…+{n}_{K}=n\right)$ (3)

In some aspects, the machine learning model can be optimized by combining updates from worker nodes using a distributed SGD algorithm such as distributed synchronous SGD or any other asynchronous SGD algorithms. In some cases, the machine learning model can be optimized according to the following equation: ${min}_{θ} f \left(θ\right) = {\sum }_{k = 1}^{K} \frac{{n}_{k}}{n} {F}_{k} \left(θ\right) ; {F}_{k} \left(θ\right) = \frac{1}{{n}_{k}} {\sum }_{i ∈ {P}_{k}} {f}_{i} \left(θ\right)$ (4)

In some examples, each worker node *k* can calculate or determine machine learning parameters by using the gradient of a loss function, as follows: ${θ}_{t + 1 , k}^{\left(d\right)} ← {θ}_{t , k}^{\left(d\right)} - {μ}_{t} ∇ {F}_{k}$ (5)

In some cases, each worker node can provide the updated machine learning parameters to a centralized parameter server that can aggregate the updated parameters from *k* worker nodes, as follows: ${θ}_{t + 1}^{\left(d\right)} ← {\sum }_{k = 1}^{K} \frac{{n}_{k}}{n} {θ}_{t + 1 , k}^{\left(d\right)}$ (6)

In some aspects, the above-steps can be repeated for *t* number of communications rounds. For example, each worker node may provide *t* updates to the centralized parameter server for aggregation. In some examples, the *t* number of communications rounds corresponds to a number of rounds to achieve convergence of the machine learning model.

In some examples, the training data used to implement distributed training is independent and identically distributed (IID) (e.g., each data set provided to worker nodes has same probability distribution as the others and all are mutually independent). In some cases, IID data can yield the following relations: ${E}_{{P}_{k}} \left[{F}_{k}\left(θ\right)\right] = f \left(θ\right) ; {lim}_{t \to ∞} {θ}_{t}^{\left(c\right)} = {lim}_{t \to ∞} {θ}_{t}^{\left(d\right)}$ (7)

In some cases, neural network 500 can be trained using federated training techniques. In some examples, federated training can correspond to a type of distributed learning that can be implemented using multiple client devices (e.g., worker nodes). In some instances, the client devices can each perform a portion of the computational tasks for training the machine learning model. In some examples, the client devices can include user equipment devices (e.g., mobile devices, IoT devices, etc.). In some cases, federated training can be used to preserve data privacy. For example, client devices implementing federated training can use private data (e.g., locally stored data) to train the machine learning model. In some aspects, the training data is not IID among client devices.

In some examples, client devices that perform federated training may have a lower computational capacity and/or less reliable network connectivity (e.g., for providing updates to parameter server) than worker nodes used in distributed learning. In some cases, client devices can be configured to provide updated parameters to a parameter server after an aggregation period (e.g., local epoch 'E'). In some examples, the aggregation period or local epoch can correspond to a number of machine learning training cycles performed by a client device prior to a communication round with the parameter server (e.g., client device update to parameters server includes parameter update corresponding to E number of training cycles). In some cases, the parameter server can optimize the machine learning model by combining the machine learning parameters from each of the client devices.

In some aspects, the machine learning model can be optimized according to Equation (4) above. In some examples, each client device *k* can calculate or determine machine learning parameters by performing the following operation for each local epoch e = 1, ..., E, as follows: ${θ}_{\left(t-1\right) E + e + 1 , k}^{\left(f\right)} ← {θ}_{\left(t-1\right) E + e , k}^{\left(f\right)} - {μ}_{t} ∇ {F}_{k}$ (8)

In some cases, each client device can provide the updated machine learning parameters to a centralized parameter server that can aggregate the updated parameters from k client devices, as follows: ${θ}_{tE + 1}^{\left(f\right)} ← {\sum }_{k = 1}^{K} \frac{{n}_{k}}{n} {θ}_{tE + 1 , k}^{\left(f\right)}$ (9)

In some aspects, the above-steps can be repeated for *t* number of communications rounds. For example, each client device may provide *t* updates to the centralized parameter server for aggregation. In some examples, the local epoch E may change or remain the same for different communication rounds. In some cases, the *t* number of communications rounds corresponds to a number of rounds to achieve convergence of the machine learning model.

In some examples, neural network 500 can be trained using hierarchical federated training techniques. In some cases, hierarchical federated training may include a hierarchical structure for aggregating updates to machine learning parameters that are calculated by client devices. For example, different sets of client devices may provide updated machine learning parameters to different nodes for aggregation. In some cases, those nodes may provide aggregated parameters (e.g., from client devices) to another node for further aggregation. In some aspects, final aggregation of all updated machine learning parameters may be performed by a node that is at the top of a hierarchical structure.

In some aspects, training of the neural network (e.g., via centralized training, distributed training, federated training, or hierarchical federated training) can result in a trained neural network having a corresponding set of neural network parameters. In some cases, the trained neural network 500 can be deployed at one or more computing devices (e.g., base station 102, the central unit (CU) 310, the distributed unit (DU) 330, the radio unit (RU) 340, and/or the UE 104).

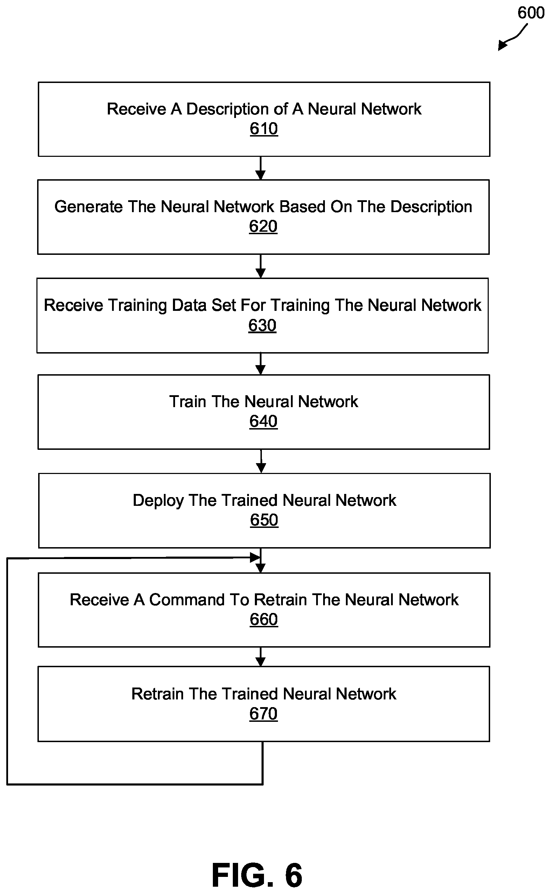

FIG. 6 is a flow chart of a process 600 of training a machine learning algorithm, such as neural network 500, in accordance with some aspects of the present disclosure. Operation of FIG. 6 will be described in relation to FIG. 5. Neural network 500 may be implemented at the base station 102, the central unit (CU) 310, the distributed unit (DU) 330, the radio unit (RU) 340, and/or the UE 104.

At operation 610, the neural controller 501 receives a description of the structure of the neural network 500 (e.g., from base station 102) including, but not limited to, the architecture of the neural network 500 and definition of layers, layer interconnections, input and output descriptions, activation functions, operations, filters, parameters such as weights, coefficients, biases, etc. In some examples, the description can be received from a device based on a user input received by the device (e.g., input via an input device, such as a keyboard, mouse, touchscreen interface, and/or other type of input device). In some examples, operation 610 is optional and may not be performed. For example, the neural network 500 can be UE specific (e.g., executed by the UE) and thus the description and specific configurations of the neural network 500 may be provided by the UE 104. At operation 620, the neural network 500 is generated based on the description received at operation 610. Using the description, the neural controller 501 generates appropriate input, intermediate, and output layers with defined interconnections between the layers and/or any weights or other parameters/coefficients assigned thereto. The weights and/or other parameters/coefficients can be set to initialized values, which will be modified during training, as described below. In some examples, operation 620 is optional and may not be performed (e.g., when the neural network 500 is UE specific).

At operation 630, once the neural network 500 is defined, a training data set is provided to the input layer 503 of the neural network 500. In some examples, there may not be an explicitly dedicated training data set for the purpose of training the neural network 500 or the training data set may not necessarily be a predetermined data set. In some examples, the real-time data can be used for live training of the neural network 500, for example, using an online-learning approach. In some aspects, the training data set may include a portion of the training data (e.g., distributed training). In some cases that implement distributed training, the training data may be independent and identically distributed (IID). In some cases, that implement federated training and/or hierarchical federated training, the training data may be private or local to the UE. In some examples, the data among UEs may not be IID.

At operation 640, the neural network 500 is trained using the training data set, a portion of the training data set, or a localized private data set on a client device (e.g., a UE). As noted above, training of the neural network can be performed using centralized learning, distributed learning, federated learning, hierarchical federated learning, and/or any other suitable learning technique. In one example, the training of the neural network 500 is an iterative process repeated multiple times. In some cases, each iteration of training can include a validation using a test data set. The test data set may include a set of one or more parameters similar to those used as part of the training dataset and associated output preference levels for one or more parameters. During each iteration, the output at the output layer 506 can be compared to the desired output or y in the training data set and a delta between the output at the output layer 506 at that iteration and the desired output defined in the training data set is determined. The weights and other parameters or coefficients of the various layers can be adjusted based on the delta. The iterative process may continue until the delta for any given set of input parameters is less than a threshold (e.g., optimizing or minimizing a loss function). The threshold may be a configurable parameter determined based on experiments and/or empirical studies.

At operation 650 and once the neural network 500 is trained, the trained neural network 500 can be deployed at the base station 102, the central unit (CU) 310, the distributed unit (DU) 330, the radio unit (RU) 340, the UE 104, and/or any other apparatus.

At operation 660, a triggering condition for retraining the neural network 500 is detected. In some cases, the command may be received after the trained neural network 500 is deployed. At operation 670, the neural network 500 is retrained using the parameters or data received as part of the command at operation 660.

Retraining the neural network 500 may include adjusting weights, coefficients, biases, and/or parameters at different nodes of the different layers of the neural network 500. The operation 660 and 670 (the retraining of the neural network 500) may be continuously repeated, thus resulting in increased accuracy of the neural network 500 over time. In some aspects, retraining of the neural network 500 can be implemented using centralized learning, distributed learning, federated learning, hierarchical federated learning, and/or any other suitable learning technique.

As noted above, systems and techniques are described herein for performing federated learning in a disaggregated radio access network (RAN). In some cases, the systems and techniques can be implemented by one or more network entities in a disaggregated RAN. For example, the systems and techniques can be implemented by a centralized unit (CU) 310, a distributed unit (DU) 330, a radio unit (RU) 340, and/or a core network 320. The systems and techniques can determine a data heterogeneity level associated with input data used for training a machine learning model by a user equipment (UE). In some aspects, the systems and techniques can use the data heterogeneity level to determine an aggregation period (e.g., local epoch) for configuring one or more UEs to train the machine learning model.

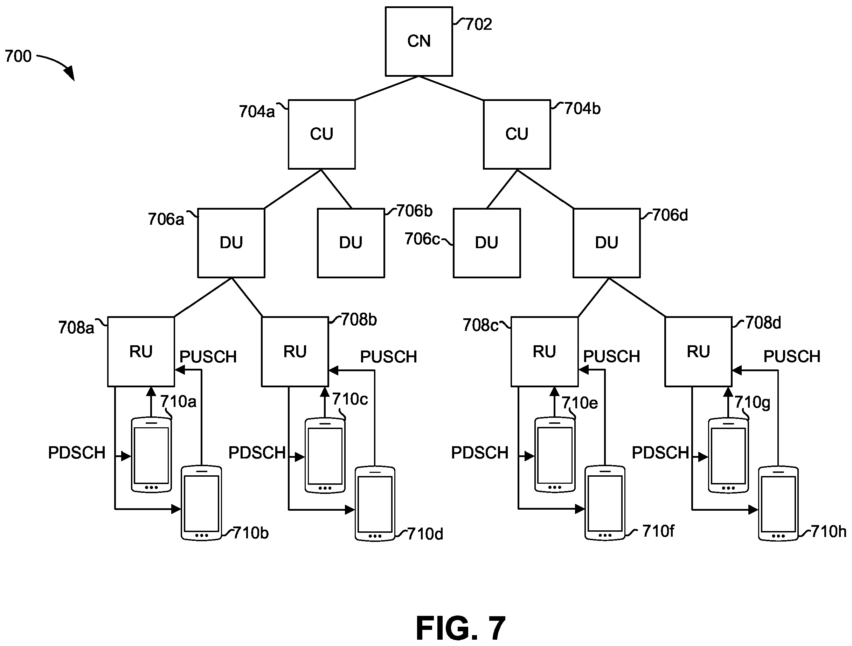

FIG. 7 illustrates an example of a wireless communication system 700 including devices configured to perform federated learning in a disaggregated radio access network (RAN). In some aspects, the system 700 can include a core network (CN) 702, which can correspond to core network 170 and/or core network 320. In some cases, the system 700 can include one or more central units (CUs) such as CU 704a and CU 704b. In some examples, CU 704a and CU 704b can communicate directly with CN 702 (e.g., via a backhaul link). In some cases, CU 704a and CU 704 can communicate indirectly with CN 702 via one or more base station units (not illustrated).

In some examples, the system 700 can include one or more distributed units (DUs) such as DU 706a, DU 706b, DU 706c, and DU 706d. In some aspects, a DU (e.g., DU 706a - DU 706d) may communicate with one or more CUs using a midhaul link (e.g., F1 interface). For example, CU 704a may communicate with DU 706a and DU 706b, and CU 704b may communicate with DU 706c and DU 706d.

In some configurations, the system 700 can include one or more radio units (RUs) such as RU 708a, RU 708b, RU 708c, and RU 708d. In some examples, a RU (e..g, RU 708a - RU 708d) may communicate with one or more DUs using a fronthaul link. For example, DU 706a may communicate with RU 708a and RU 708b and DU 706d may communicate with RU 708c and RU 708d. In some aspects, one or more of the respective CUs, DUs, and RUs may correspond to a disaggregated radio access network (e.g., a disaggregated base station).

In some cases, each RU can communicate with one or more UEs (e.g., using a radio frequency (RF) interface). For example, RU 708a can communicate with UE 710a and UE 710b; RU 708b can communicate with UE 710c and UE 710d; RU 708c can communicate with UE 710e and UE 710f; and RU 708d can communicate with UE 710g and UE 710h. As noted above, a UE may include and/or be referred to as an access terminal, a user device, a user terminal, a client device, a wireless device, a subscriber device, a subscriber terminal, a subscriber station, a mobile device, a mobile terminal, a mobile station, or variations thereof. In some aspects, a UE can include a mobile telephone or so-called "smart phone", a tablet computer, a wearable device, an extended reality device (e.g., a virtual reality (VR) device, an augmented reality (AR) device, or a mixed reality (MR) device), a personal computer, a laptop computer, an internet of things (IoT) device, a television, a vehicle (or a computing device of a vehicle), or any other device having a radio frequency (RF) interface.

In some aspects, one or more of the UEs (e.g., UE 710a - UE 710h) in system 700 can be configured to perform federated training (e.g., federated learning) of a machine learning model. In some examples, model parameter updates (e.g., determined by the UEs) may be aggregated by one or more network entities in system 700. In some cases, the machine learning model can be provided to the UEs by one or more network entities in system 700. For example, RU 708a can send (e.g., transmit, provide) a machine learning model to UE 710a and/or UE 710b. In another example, RU 708b can send a machine learning model to UE 710c and/or UE 710c. In some examples, the machine learning model may be disseminated to one or more of the UEs in system 700 via one or more of the network elements in the hierarchical structure of the disaggregated RAN. For example, the machine learning model may be received by system 700 via CN 702 and may be provided to one or more UEs through one or more respective CUs, DUs, and/or RUs.

In some examples, one or more of the UEs (e.g., UE 710a - UE 710h) may perform federated training of a machine learning model using local or private data. In some aspects, the input data used by a UE to train a machine learning model can include any type of data stored on the UE. For example, the input data used by a UE to train a machine learning model may include image data, video data, audio data, geolocation data, browsing data, financial data, demographic data, application data, usage data, network data, social media data, any other type of data, and/or any combination thereof.

In some aspects, the input data used by the respective UEs (e.g., UE 710a - UE 710h) to train a machine learning model may have a level of heterogeneity (e.g., variability). For example, data used by the UEs to train the machine learning model may have a level of heterogeneity because the data is not independent and identically distributed (IID). In one illustrative example, UE 710a and UE 710b may each train a machine learning model using private image data that is different (e.g., locally stored on the respective UE).

In some cases, a network entity may determine a data heterogeneity level among UEs. For example, RU 708a may determine a data heterogeneity level based on the input data used by UE 710a and UE 710b. In another example, RU 708b may determine a data heterogeneity level based on the input data used by UE 710c and UE 710d. In some aspects, the data heterogeneity level can be based on model parameter updates (e.g., gradients or vectors) provided by a UE or a network entity. For instance, RU 708a may determine a data heterogeneity level based on model parameter updates provided by UE 710a and UE 710b. In another example, DU 706a may determine a data heterogeneity level based on model parameter updates provided by RU 708a and RU 708b. In some cases, the data heterogeneity level may be based on the variance among model parameter updates (e.g., gradients or vectors) received by a network entity. In some examples, the data heterogeneity level can be a measure of dispersion. For example, a higher standard deviation among data values may indicate a higher data heterogeneity level. In some aspects, the data heterogeneity level can be determined based on Q statistic, I² statistic, and/or any other suitable algorithm.

In some aspects, a network entity may use the data heterogeneity level to determine an aggregation period (also referred to herein as a local epoch 'E') for configuring a number of training cycles or a number of aggregation cycles that are associated with a communication round. In some cases, the aggregation period can correspond to a number of machine learning training cycles performed by a UE per communication round. For example, RU 708a may configure UE 710a and UE 710b to perform federated training using an aggregation period or local epoch of 3. Based on this local epoch configuration, UE 710a and UE 710b can perform 3 training cycles before sending model parameter updates to RU 708a (e.g., perform 3 training cycles per communication round).

In some cases, the aggregation period can correspond to a number of aggregation cycles performed by a network entity per communication round. For example, DU 706a may configure RU 708a and RU 708b to perform data aggregation using an aggregation period or local epoch of 2. Based on this local epoch configuration, RU 708a and RU 708b can aggregate model parameter updates (e.g., received from associated UEs) 2 times before sending aggregated model parameter updates to DU 706a. In some aspects, network entities at the same or different hierarchical level can be configured to use the same or different aggregation periods. For example, RU 708a and RU 708b can be configured to use the same aggregation period or different aggregation periods. In another example, DU 706a and RU 708a may be configured to use the same aggregation period or different aggregation periods.

In some examples, a higher data heterogeneity level may correspond to a lower aggregation period. In some cases, higher levels of data heterogeneity among UEs or network entities may cause locally trained machine learning models (e.g., trained by UE 710a - UE 710h) to deviate which may delay or disrupt convergence. In some aspects, a network entity may offset higher levels of data heterogeneity by configuring a UE to use a lower aggregation period (e.g., network entity can configure a lower aggregation period to reduce detrimental effect of data heterogeneity). In one illustrative example, a network entity may configure a UE to use an aggregation period of 1 when the data heterogeneity level is relatively high or above a threshold value. In another illustrative example, a network entity may configure a UE to use an aggregation period of 5 when the data heterogeneity level is relatively low or below a threshold value.

In some examples, a UE and/or network entity may be configured to use a higher aggregation period to reduce communication costs associated with transmitting network parameters (e.g., transmission resources, bandwidth, etc). For instance, RU 708a may increase the aggregation period used by UE 710a and UE 710b in order to reduce the number of communication rounds between UE 710a and RU 710a as well as the number of communication rounds between UE 710b and RU 710a. In another example, DU 706a may increase the aggregation period used by RU 708a and RU 708b in order to reduce the number of communication rounds between RU 708a and DU 706a as well as the number of communication rounds between RU 708b and DU 706a.

In some cases, aggregation of model parameters can be performed by one or more network entities on different hierarchical layers within system 700. In some aspects, RUs (e.g., RU 708a - RU 708d) can perform a first level of aggregation. In some cases, DUs (e.g., DU 706a - DU 706d) can perform a second level of aggregation. In some aspects, CUs (e.g., CU 704a and/or CU 704b) can perform a third level of aggregation. In some instances, CN 702 can perform a fourth level of aggregation. In some configurations, aggregation can be performed by network entities corresponding to a portion of the hierarchical layers. In some examples, the network entities performing aggregation may correspond to non-contiguous hierarchical layers. For example, a first level of aggregation may be performed by one or more DUs (e.g., DU 706a - DU 706d) and a second level of aggregation may be performed by CN 702.

In some aspects, system 700 can be configured to perform over-the-air (OTA) aggregation of model parameter updates from two or more UEs (e.g., UE 710a - UE 710h). In some cases, OTA aggregation may be performed by configuring multiple UEs to transmit the model parameter updates using the same transmission resources (e.g., time/frequency resources) with analog transmission. For example, UE 710a and UE 710b can be configured to transmit model parameter updates using the same resource allocation in a multiple access channel. In some aspects, the model parameter updates can be combined in the multiple access channel (e.g., Physical Uplink Shared Channel (PUSCH)) before being received by a network entity (e.g., RU 708a). In some cases, the model parameter updates can correspond to a high dimensional vector that includes real numbers.

In some cases, RUs can perform aggregation of model parameter updates received in PUSCH transmissions from UEs. For example, RU 708a can receive a first PUSCH transmission (e.g., including model parameter updates) from UE 710a and second PUSCH transmission from UE 710b. In some cases, RU 708a can forward the data to DU 706a. In some examples, DU 706a may decode the data (e.g., decode digitally transmitted symbols). In some aspects, DU 706a may provide the decoded data to RU 708a for aggregation. In some cases, DU 706a may perform the aggregation of the decoded data (e.g., the model parameter updates from UE 710a and UE 710b).

In some aspects, network entities corresponding to different hierarchical levels may aggregate model parameter updates associated with one or more layers (e.g., input layer 503, hidden layers 504, and/or output layer 506) of a machine learning model. In one illustrative example, a machine learning model may include 4 layers. In some aspects, the RUs (e.g., RU 708a - RU 708d) may aggregate model parameter updates corresponding to layer 4; the DUs (e.g., DU 706a - DU 706d) may aggregate model parameter updates corresponding to layer 3; the CUs (e.g., CU 704a and CU 704b) may aggregate model parameter updates corresponding to layer 2; and CN 702 may aggregate model parameter updates corresponding to layer 1. In some cases, partial model updates based on hierarchical levels can be used to reduce communication overhead among network entities.

In some examples, hierarchical federated learning can be used to provide modified models (e.g., personalized and/or specialized models) at different network entities. For example, RU 708a may use model parameter updates from UE 710a and UE 710b to derive or determine a first modified model that is personalized based on the private training data used by UE 710a and UE 710b. In some cases, RU 708b may use model parameter updates from UE 710c and UE 710d to derive or determine a second modified model that is personalized based on the private training data used by UE 710c and UE 710d.

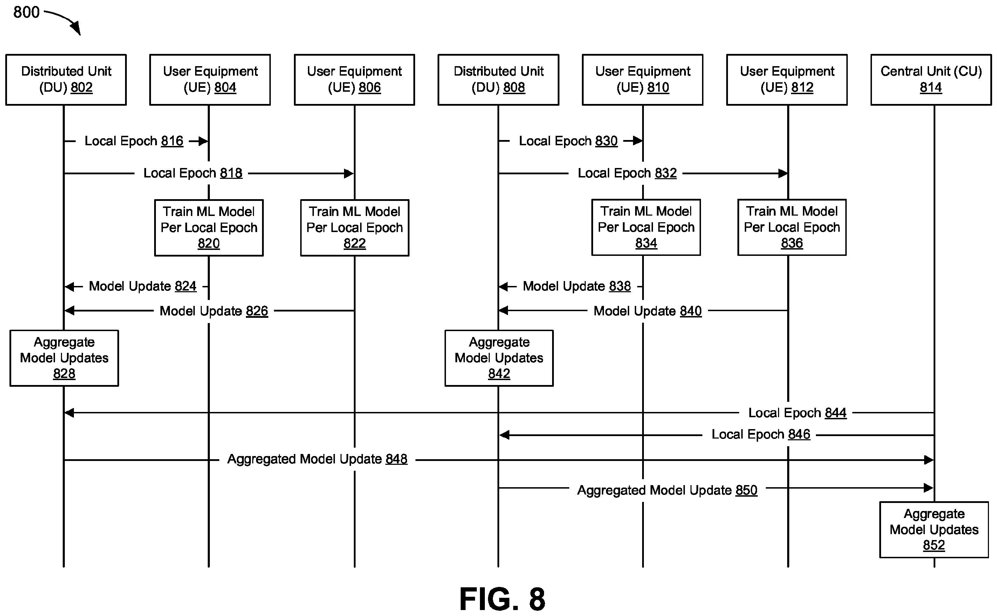

FIG. 8 is a sequence diagram illustrating an example of a sequence 800 for performing federated learning in a disaggregated radio access network (RAN). The sequence 800 may be performed by a distributed unit (DU) 802, a user equipment (UE) 804, a UE 806, a DU 808, a UE 810, a UE 812 and a central unit (CU) 814. At action 816, DU 802 can send a local epoch 'E' or aggregation period to UE 804. At action 818, DU 802 can send a local epoch 'E' or aggregation period to UE 806. In some aspects, the local epoch can be based on a data heterogeneity level determined by DU 802. In some cases, the data heterogeneity level can be determined based on the input data used by UE 804 and/or UE 806 to train the machine learning model.

In some examples, the local epoch can be used to configure UE 804 and UE 806 to perform 'E' number of training cycles for a communication round. For example, at action 820, UE 804 can train the machine learning model according to the local epoch. For instance, UE 804 can determine model parameter updates using a number of training cycles that is based on the local epoch. In some cases, at action 822 UE 806 can train the machine learning model according to the local epoch. For example, UE 806 can determine model parameter updates using a number of training cycles that is based on the local epoch.

At action 824, UE 804 can transmit a model parameter update to DU 802. At action 826, UE 806 can transmit a model parameter update to DU 802. At action 828, DU 802 can aggregate the model parameter updates received from UE 804 and UE 806. In some examples, aggregating model parameter updates can include averaging the respective model parameter updates. In some cases, aggregating model parameter updates can include calculating a weighted average of the respective model parameter updates. In some aspects, the weights for determining the weighted average can be based on the data heterogeneity level, the local epoch value, the number of layers in the machine learning model, and/or any other parameter. In one illustrative example, each model parameter update can be associated with a coefficient (e.g., a hyper-parameter) that can be used to calculate the weighted average (e.g., each model parameter update vector can be multiplied by a respective coefficient for averaging).

At action 830, DU 808 can send a local epoch 'E' or aggregation period to UE 810. At action 832, DU 808 can send a local epoch 'E' or aggregation period to UE 812. In some aspects, the local epoch can be based on a data heterogeneity level determined by DU 808. In some cases, the data heterogeneity level can be determined based on the input data used by UE 810 and/or UE 812 to train the machine learning model. In some aspects, the local epoch value determined by DU 808 can be the same or different than the local epoch value determined by DU 802.

At action 834, UE 810 can train the machine learning model according to the local epoch. For instance, UE 810 can determine model parameter updates using a number of training cycles that is based on the local epoch as configured by DU 808. At action 836, UE 812 can determine model parameter updates using a number of training cycles that is based on the local epoch as configured by DU 808.

At action 838, UE 810 can transmit a model parameter update to DU 808. At action 840, UE 812 can transmit a model parameter update to DU 808. At action 842, DU 808 can aggregate the model parameter updates received from UE 810 and UE 812. As noted above, aggregating model parameter updates can include averaging the model parameter updates, calculating a weighted average of the model parameter updates, and/or performing any other suitable algorithm for combining the model parameter updates.

At action 844, CU 814 can send a local epoch 'E' value to DU 802. At action 846, CU 814 can send a local epoch 'E' value to DU 808. In some cases, the local epoch may be used to configure a network entity (e.g., DU 802 and DU 808) to perform 'E' number of aggregation cycles prior to communicating model parameter updates to a network entity on the next hierarchical level (e.g., CU 814).

At action 848, DU 802 can send an aggregated model parameter update (e.g., based on updates from UE 804 and UE 806) to CU 814. At action 850, DU 808 can send an aggregated model parameter update (e.g., based on updates from UE 810 and UE 812) to CU 814. At action 852, CU 814 can further aggregate (e.g., average, weighted average, etc.) the model parameter updates received from DU 802 and DU 808.

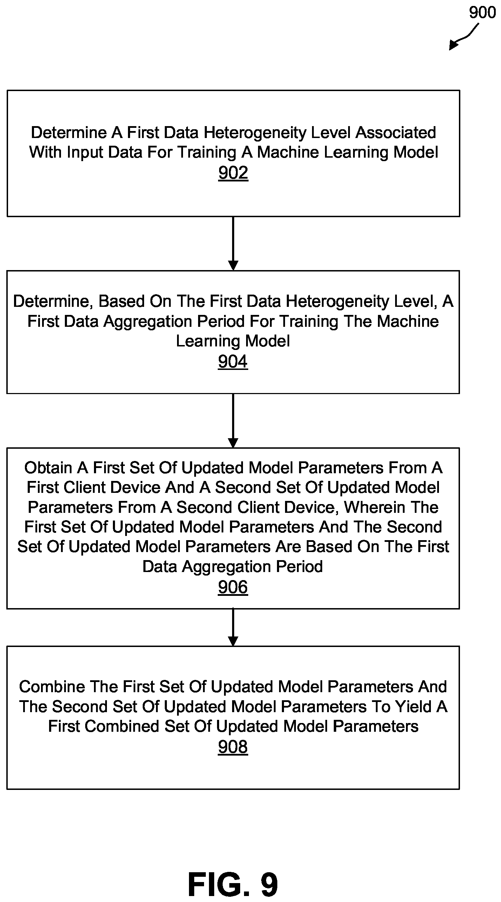

FIG. 9 is a flow diagram illustrating an example of a process 900 for performing federated learning in a disaggregated radio access network (RAN). At block 902, the process 900 includes determining a first heterogeneity level associated with input data for training a machine learning model. For example, RU 708a can determine a first heterogeneity level associated with data corresponding to UE 710a and UE 710b. In some aspects, UE 710a and UE 710b can be configured to perform federated training of the machine learning model. In some aspects, the input data can correspond to data that is not independently and identically distributed.

At block 904, the process 900 includes determining, based on the first data heterogeneity level, a first data aggregation period for training the machine learning model. For example, RU 708a can determine a first aggregation period (e.g., local epoch) that can be used by UE 710a and UE 710b to perform federated training of the machine learning model. In some aspects, the first data aggregation period can be used to configure a UE (e.g., UE 710a and/or UE 710b) to perform a number of machine learning training cycles prior to communicating an update to RU 708a.

At block 906, the process 900 includes obtaining a first set of updated model parameters from a first client device and a second set of updated model parameters from a second client device, wherein the first set of updated model parameters and the second set of updated model parameters are based on the first data aggregation period. For instance, UE 708a can receive a first set of updated model parameters from UE 710a and a second set of updated model parameters from UE 710b. In some cases, the updated model parameters are based on the data aggregation period (e.g., updated model parameters correspond to number of training cycles as configured by the data aggregation period).

At block 908, the process 900 includes combining the first set of updated model parameters and the second set of updated model parameters to yield a first combined set of updated model parameters. For example, RU 708a can combine the first set of updated model parameters received from UE 710a and the second set of updated model parameters received from UE 710b. In some aspects, combining the first set of updated model parameters and the second set of updated model parameters can include averaging the first set of updated model parameters and the second set of updated model parameters. In some aspects, the averaging can correspond to calculating a weighted average. In some examples, the first set of updated model parameters and the second set of updated model parameters can correspond to a single layer of a plurality of layers of the machine learning model. For example, RU 708a may be configured to perform aggregation of model parameter updates corresponding to a particular layer of a plurality of layers (e.g., input layer 503, hidden layers 504, output layer 506, etc.) of the machine learning model.

In some aspects, the first set of updated model parameters and the second set of updated model parameters are combined over-the-air using a same shared channel. For example, UE 710a and UE 710b can each be configured to transmit model parameter updates using the same resource allocation in a Physical Uplink Shared Channel (PUSCH). In some aspects the respective parameter updates can be aggregated over-the-air using the share channel.

In some aspects, the process 900 can include determining that a second data heterogeneity level associated with input data for training the machine learning model is less than the first data heterogeneity level and determining, based on the second data heterogeneity level, a second data aggregation period for training the machine learning model, wherein the second data aggregation period is greater than the first data aggregation period. For example, RU 708a can determine that a second data heterogeneity level associated with input data for training the machine learning model is less than the first data heterogeneity level. In some cases, RU 708a can determine, based on the second data heterogeneity level, a second aggregation period for training the machine learning model that is greater than the first data aggregation period.

In some examples, the process 900 can include sending the first set of updated model parameters and the second set of updated model parameters to a second network entity and receiving a first decoded set of updated model parameters and a second decoded set of updated model parameters from the second network entity. In some cases, the first network entity can correspond to a radio unit (RU) and the second network entity can correspond to a distributed unit (DU). For instance, RU 708a can send the first set of updated model parameters and the second set of updated model parameters to DU 706a. In some example, RU 708a can receive a first decoded set of updated model parameters and a second decoded set of updated model parameters from DU 706a.

In some cases, the process 900 may include sending the first combined set of updated model parameters to a second network entity, wherein the second network entity is upstream from the first network entity. For example, RU 708a can send the first combined set of updated model parameters to DU 706a. In some cases, the second network entity can be configured to aggregate the first combined set of updated model parameters with a second combined set of updated model parameters. For example, DU 706a may be configured to aggregate the first combined set of updated model parameters from RU 708a with a second combined set of updated model parameters from RU 708b.

In some cases, the process 900 can include updating the machine learning model based on the first combined set of updated model parameters to yield a modified machine learning model. For example, RU 708a can update the machine learning model based on the first combined set of updated model parameters to yield a modified (e.g., personalized) machine learning model. In some aspects, the modified machine learning model can be uniquely based on the input data used by UEs (e.g., UE 710a and UE 710b) to train the model.

In some aspects, the first data heterogeneity level can be based on at least one of a variance and a dispersion among model parameter updates received from the first client device and the second client device. For example, RU 708a can determine the first data heterogeneity level based on model parameter updates received from UE 710a and UE 710b. In one illustrative example, model parameter updates may correspond to vectors and the data heterogeneity level can be based on the variance or the dispersion of the model parameter update vectors.

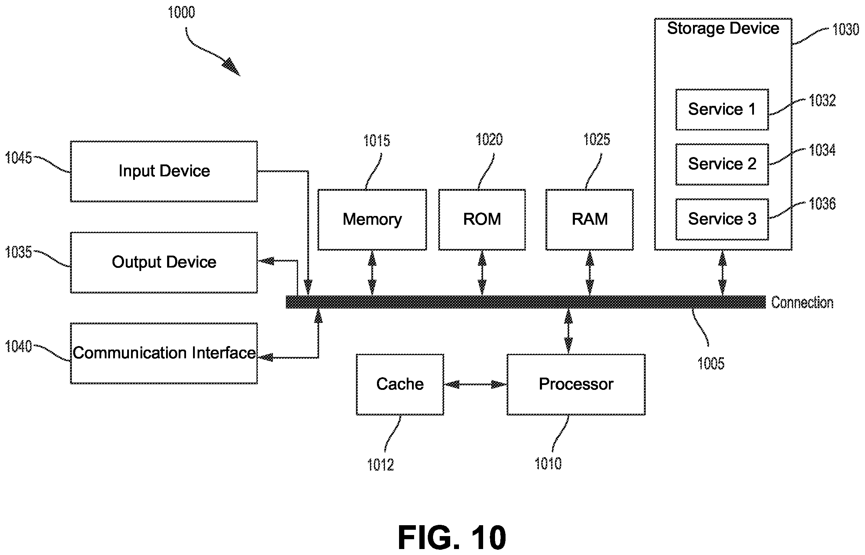

In some examples, the processes described herein (e.g., process 600, sequence 800, process 900 and/or other process described herein) may be performed by a computing device or apparatus (e.g., a UE or a base station). In one example, the process 600, sequence 800, and/or process 900 can be performed by the base station 102 of FIG. 2, the RU 340 of FIG. 3, the DU 330 of FIG. 3, and/or the CU 310 of FIG. 3. In another example, the process 600, sequence 800, process 900 may be performed by a computing device with the computing system 1000 shown in FIG. 10.

In some cases, the computing device or apparatus may include various components, such as one or more input devices, one or more output devices, one or more processors, one or more microprocessors, one or more microcomputers, one or more cameras, one or more sensors, and/or other component(s) that are configured to carry out the steps of processes described herein. In some examples, the computing device may include a display, one or more network interfaces configured to communicate and/or receive the data, any combination thereof, and/or other component(s). The one or more network interfaces can be configured to communicate and/or receive wired and/or wireless data, including data according to the 3G, 4G, 5G, and/or other cellular standard, data according to the Wi-Fi (802.11x) standards, data according to the Bluetooth^{™} standard, data according to the Internet Protocol (IP) standard, and/or other types of data.

The components of the computing device can be implemented in circuitry. For example, the components can include and/or can be implemented using electronic circuits or other electronic hardware, which can include one or more programmable electronic circuits (e.g., microprocessors, neural processing units (NPUs), graphics processing units (GPUs), digital signal processors (DSPs), central processing units (CPUs), and/or other suitable electronic circuits), and/or can include and/or be implemented using computer software, firmware, or any combination thereof, to perform the various operations described herein.

The process 600, sequence 800, and process 900 are illustrated as logical flow diagrams, the operation of which represents a sequence of operations that can be implemented in hardware, computer instructions, or a combination thereof. In the context of computer instructions, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular data types. The order in which the operations are described is not intended to be construed as a limitation, and any number of the described operations can be combined in any order and/or in parallel to implement the processes.

Additionally, process 600, sequence 800, process 900 and/or other processes described herein may be performed under the control of one or more computer systems configured with executable instructions and may be implemented as code (e.g., executable instructions, one or more computer programs, or one or more applications) executing collectively on one or more processors, by hardware, or combinations thereof. As noted above, the code may be stored on a computer-readable or machine-readable storage medium, for example, in the form of a computer program comprising a plurality of instructions executable by one or more processors. The computer-readable or machine-readable storage medium may be non-transitory.

FIG. 10 is a diagram illustrating an example of a system for implementing certain aspects of the present technology. In particular, FIG. 10 illustrates an example of computing system 1000, which may be for example any computing device making up internal computing system, a remote computing system, a camera, or any component thereof in which the components of the system are in communication with each other using connection 1005. Connection 1005 may be a physical connection using a bus, or a direct connection into processor 1010, such as in a chipset architecture. Connection 1005 may also be a virtual connection, networked connection, or logical connection.

In some embodiments, computing system 1000 is a distributed system in which the functions described in this disclosure may be distributed within a datacenter, multiple data centers, a peer network, etc. In some embodiments, one or more of the described system components represents many such components each performing some or all of the function for which the component is described. In some embodiments, the components may be physical or virtual devices.

Example system 1000 includes at least one processing unit (CPU or processor) 1010 and connection 1005 that communicatively couples various system components including system memory 1015, such as read-only memory (ROM) 1020 and random access memory (RAM) 1025 to processor 1010. Computing system 1000 may include a cache 1012 of high-speed memory connected directly with, in close proximity to, or integrated as part of processor 1010.

Processor 1010 may include any general purpose processor and a hardware service or software service, such as services 1032, 1034, and 1036 stored in storage device 1030, configured to control processor 1010 as well as a special-purpose processor where software instructions are incorporated into the actual processor design. Processor 1010 may essentially be a completely self-contained computing system, containing multiple cores or processors, a bus, memory controller, cache, etc. A multi-core processor may be symmetric or asymmetric.

To enable user interaction, computing system 1000 includes an input device 1045, which may represent any number of input mechanisms, such as a microphone for speech, a touch-sensitive screen for gesture or graphical input, keyboard, mouse, motion input, speech, etc. Computing system 1000 may also include output device 1035, which may be one or more of a number of output mechanisms. In some instances, multimodal systems may enable a user to provide multiple types of input/output to communicate with computing system 1000.

Computing system 1000 may include communications interface 1040, which may generally govern and manage the user input and system output. The communication interface may perform or facilitate receipt and/or transmission wired or wireless communications using wired and/or wireless transceivers, including those making use of an audio jack/plug, a microphone jack/plug, a universal serial bus (USB) port/plug, an Apple^{™} Lightning^{™} port/plug, an Ethernet port/plug, a fiber optic port/plug, a proprietary wired port/plug, 3G, 4G, 5G and/or other cellular data network wireless signal transfer, a Bluetooth^{™} wireless signal transfer, a Bluetooth^{™} low energy (BLE) wireless signal transfer, an IBEACON^{™} wireless signal transfer, a radio-frequency identification (RFID) wireless signal transfer, near-field communications (NFC) wireless signal transfer, dedicated short range communication (DSRC) wireless signal transfer, 802.11 Wi-Fi wireless signal transfer, wireless local area network (WLAN) signal transfer, Visible Light Communication (VLC), Worldwide Interoperability for Microwave Access (WiMAX), Infrared (IR) communication wireless signal transfer, Public Switched Telephone Network (PSTN) signal transfer, Integrated Services Digital Network (ISDN) signal transfer, ad-hoc network signal transfer, radio wave signal transfer, microwave signal transfer, infrared signal transfer, visible light signal transfer, ultraviolet light signal transfer, wireless signal transfer along the electromagnetic spectrum, or some combination thereof. The communications interface 1040 may also include one or more Global Navigation Satellite System (GNSS) receivers or transceivers that are used to determine a location of the computing system 1000 based on receipt of one or more signals from one or more satellites associated with one or more GNSS systems. GNSS systems include, but are not limited to, the US-based Global Positioning System (GPS), the Russia-based Global Navigation Satellite System (GLONASS), the China-based BeiDou Navigation Satellite System (BDS), and the Europe-based Galileo GNSS. There is no restriction on operating on any particular hardware arrangement, and therefore the basic features here may easily be substituted for improved hardware or firmware arrangements as they are developed.

Storage device 1030 may be a non-volatile and/or non-transitory and/or computer-readable memory device and may be a hard disk or other types of computer readable media which may store data that are accessible by a computer, such as magnetic cassettes, flash memory cards, solid state memory devices, digital versatile disks, cartridges, a floppy disk, a flexible disk, a hard disk, magnetic tape, a magnetic strip/stripe, any other magnetic storage medium, flash memory, memristor memory, any other solid-state memory, a compact disc read only memory (CD-ROM) optical disc, a rewritable compact disc (CD) optical disc, digital video disk (DVD) optical disc, a bluray disc (BDD) optical disc, a holographic optical disk, another optical medium, a secure digital (SD) card, a micro secure digital (microSD) card, a Memory Stick^{®} card, a smartcard chip, a EMV chip, a subscriber identity module (SIM) card, a mini/micro/nano/pico SIM card, another integrated circuit (IC) chip/card, random access memory (RAM), static RAM (SRAM), dynamic RAM (DRAM), read-only memory (ROM), programmable read-only memory (PROM), erasable programmable read-only memory (EPROM), electrically erasable programmable read-only memory (EEPROM), flash EPROM (FLASHEPROM), cache memory (e.g., Level 1 (L1) cache, Level 2 (L2) cache, Level 3 (L3) cache, Level 4 (L4) cache, Level 5 (L5) cache, or other (L#) cache), resistive random-access memory (RRAM/ReRAM), phase change memory (PCM), spin transfer torque RAM (STT-RAM), another memory chip or cartridge, and/or a combination thereof.

The storage device 1030 may include software services, servers, services, etc., that when the code that defines such software is executed by the processor 1010, it causes the system to perform a function. In some embodiments, a hardware service that performs a particular function may include the software component stored in a computer-readable medium in connection with the necessary hardware components, such as processor 1010, connection 1005, output device 1035, etc., to carry out the function. The term "computer-readable medium" includes, but is not limited to, portable or non-portable storage devices, optical storage devices, and various other mediums capable of storing, containing, or carrying instruction(s) and/or data. A computer-readable medium may include a non-transitory medium in which data may be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

Specific details are provided in the description above to provide a thorough understanding of the embodiments and examples provided herein.

For clarity of explanation, in some instances the present technology may be presented as including individual functional blocks comprising devices, device components, steps or routines in a method embodied in software, or combinations of hardware and software. Additional components may be used other than those shown in the figures and/or described herein. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Individual embodiments may be described above as a process or method which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process is terminated when its operations are completed but could have additional steps not included in a figure. A process may correspond to a method, a function, a procedure, a subroutine, a subprogram, etc. When a process corresponds to a function, its termination can correspond to a return of the function to the calling function or the main function.

Processes and methods according to the above-described examples can be implemented using computer-executable instructions that are stored or otherwise available from computer-readable media. Such instructions can include, for example, instructions and data which cause or otherwise configure a general purpose computer, special purpose computer, or a processing device to perform a certain function or group of functions. Portions of computer resources used can be accessible over a network. The computer executable instructions may be, for example, binaries, intermediate format instructions such as assembly language, firmware, source code. Examples of computer-readable media that may be used to store instructions, information used, and/or information created during methods according to described examples include magnetic or optical disks, flash memory, USB devices provided with non-volatile memory, networked storage devices, and so on.

In some embodiments the computer-readable storage devices, mediums, and memories can include a cable or wireless signal containing a bitstream and the like. However, when mentioned, non-transitory computer-readable storage media expressly exclude media such as energy, carrier signals, electromagnetic waves, and signals per se.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof, in some cases depending in part on the particular application, in part on the desired design, in part on the corresponding technology, etc.

The various illustrative logical blocks, modules, and circuits described in connection with the aspects disclosed herein may be implemented or performed using hardware, software, firmware, middleware, microcode, hardware description languages, or any combination thereof, and can take any of a variety of form factors. When implemented in software, firmware, middleware, or microcode, the program code or code segments to perform the necessary tasks (e.g., a computer-program product) may be stored in a computer-readable or machine-readable medium. A processor(s) may perform the necessary tasks. Examples of form factors include laptops, smart phones, mobile phones, tablet devices or other small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are example means for providing the functions described in the disclosure.

The techniques described herein may also be implemented in electronic hardware, computer software, firmware, or any combination thereof. Such techniques may be implemented in any of a variety of devices such as general purposes computers, wireless communication device handsets, or integrated circuit devices having multiple uses including application in wireless communication device handsets and other devices. Any features described as modules or components may be implemented together in an integrated logic device or separately as discrete but interoperable logic devices. If implemented in software, the techniques may be realized at least in part by a computer-readable data storage medium comprising program code including instructions that, when executed, performs one or more of the methods, algorithms, and/or operations described above. The computer-readable data storage medium may form part of a computer program product, which may include packaging materials. The computer-readable medium may comprise memory or data storage media, such as random access memory (RAM) such as synchronous dynamic random access memory (SDRAM), read-only memory (ROM), non-volatile random access memory (NVRAM), electrically erasable programmable read-only memory (EEPROM), FLASH memory, magnetic or optical data storage media, and the like. The techniques additionally, or alternatively, may be realized at least in part by a computer-readable communication medium that carries or communicates program code in the form of instructions or data structures and that can be accessed, read, and/or executed by a computer, such as propagated signals or waves.

The program code may be executed by a processor, which may include one or more processors, such as one or more digital signal processors (DSPs), general purpose microprocessors, an application specific integrated circuits (ASICs), field programmable logic arrays (FPGAs), or other equivalent integrated or discrete logic circuitry. Such a processor may be configured to perform any of the techniques described in this disclosure. A general-purpose processor may be a microprocessor; but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Accordingly, the term "processor," as used herein may refer to any of the foregoing structure, any combination of the foregoing structure, or any other structure or apparatus suitable for implementation of the techniques described herein.

One of ordinary skill will appreciate that the less than ("<") and greater than (">") symbols or terminology used herein can be replaced with less than or equal to (" ≤ ") and greater than or equal to (" ≥ ") symbols, respectively, without departing from the scope of this description.

Where components are described as being "configured to" perform certain operations, such configuration can be accomplished, for example, by designing electronic circuits or other hardware to perform the operation, by programming programmable electronic circuits (e.g., microprocessors, or other suitable electronic circuits) to perform the operation, or any combination thereof.

The phrase "coupled to" or "communicatively coupled to" refers to any component that is physically connected to another component either directly or indirectly, and/or any component that is in communication with another component (e.g., connected to the other component over a wired or wireless connection, and/or other suitable communication interface) either directly or indirectly.

Claim language or other language reciting "at least one of" a set and/or "one or more" of a set indicates that one member of the set or multiple members of the set (in any combination) satisfy the claim. For example, claim language reciting "at least one of A and B" or "at least one of A or B" means A, B, or A and B. In another example, claim language reciting "at least one of A, B, and C" or "at least one of A, B, or C" means A, B, C, or A and B, or A and C, or B and C, A and B and C, or any duplicate information or data (e.g., A and A, B and B, C and C, A and A and B, and so on), or any other ordering, duplication, or combination of A, B, and C. The language "at least one of" a set and/or "one or more" of a set does not limit the set to the items listed in the set. For example, claim language reciting "at least one of A and B" or "at least one of A or B" may mean A, B, or A and B, and may additionally include items not listed in the set of A and B.

## Claims

1. A method for performing federated learning at a first network entity in a disaggregated radio access network, RAN, comprising:
determining (902) a first data heterogeneity level associated with input data for training a machine learning model, wherein the first data heterogeneity level is based on at least one of a variance and a dispersion among model parameter updates received from a first client device and a second client device;
determining (904), based on the first data heterogeneity level, a first data aggregation period for configuring a number of training cycles for training the machine learning model or a number of aggregation cycles, wherein the number of training cycles or the number of aggregation cycles are associated with a communication round;
obtaining (906) a first set of updated model parameters from the first client device and a second set of updated model parameters from the second client device, wherein the first set of updated model parameters and the second set of updated model parameters are based on the first data aggregation period; and
combining (908) the first set of updated model parameters and the second set of updated model parameters to yield a first combined set of updated model parameters.

2. The method of claim 1, wherein the first data aggregation period corresponds to a number of machine learning training cycles performed by a client device per communication round; or
wherein the first data aggregation period corresponds to a number of aggregation cycles performed by a network entity per communication round.

3. The method of any of claims 1 or 2, further comprising:
determining that a second data heterogeneity level associated with input data for training the machine learning model is less than the first data heterogeneity level, wherein the second data heterogeneity level is based on at least one of a variance and a dispersion among model parameter updates received by the first network entity; and
determining, based on the second data heterogeneity level, a second data aggregation period for training the machine learning model, wherein the second data aggregation period is greater than the first data aggregation period.

4. The method of any of claims 1 to 3, further comprising:
sending the first set of updated model parameters and the second set of updated model parameters to a second network entity; and
receiving a first decoded set of updated model parameters and a second decoded set of updated model parameters from the second network entity.

5. The method of claim 4, wherein the first network entity corresponds to a radio unit, RU, and the second network entity corresponds to a distributed unit, DU.

6. The method of any of claims 1 to 5, further comprising:
sending the first combined set of updated model parameters to a second network entity, wherein the second network entity is upstream from the first network entity.

7. The method of any of claims 1 to 6, wherein combining the first set of updated model parameters and the second set of updated model parameters comprises:
averaging the first set of updated model parameters and the second set of updated model parameters.

8. The method of any of claims 1 to 7, wherein the first set of updated model parameters and the second set of updated model parameters are combined over-the-air using a same shared channel.

9. The method of any of claims 1 to 8, wherein the input data corresponds to data that is not independently and identically distributed.

10. The method of any of claims 1 to 9, wherein the first set of updated model parameters and the second set of updated model parameters correspond to a single layer of a plurality of layers of the machine learning model.

11. The method of any of claims 1 to 10, further comprising:
updating the machine learning model based on the first combined set of updated model parameters to yield a modified machine learning model.

12. An apparatus for wireless communications configured as a network entity in a dis-aggregated radio access network, RAN, comprising:
means for determining a first data heterogeneity level associated with means for inputting data for training a machine learning model, wherein the first data heterogeneity level is based on at least one of a variance and a dispersion among model parameter updates received from a first client device and a second client device;
means for determining, based on the first data heterogeneity level, a first data aggregation period for configuring a number of training cycles for training the machine learning model or a number of aggregation cycles, wherein the number of training cycles or the number of aggregation cycles are associated with a communication round;
means for obtaining a first set of updated model parameters from the first client device and a second set of updated model parameters from the second client device, wherein the first set of updated model parameters and the second set of updated model parameters are based on the first data aggregation period; and
means for combining the first set of updated model parameters and the second set of updated model parameters to yield a first combined set of updated model parameters.

13. The apparatus of claim 12, further comprising means for carrying out the method of any one of claims 2-11.

14. A computer program comprising instructions which, when executed by a computer, cause the computer to perform the method of any one of claims 2-11.

## Patentansprüche

1. Verfahren zum Durchführen von föderiertem Lernen an einer ersten Netzwerkentität in einem disaggregierten Funkzugangsnetzwerk, RAN, umfassend:
Bestimmen (902) eines ersten Datenheterogenitätsniveaus, das Eingabedaten zum Trainieren eines Maschinenlernmodells zugeordnet ist, wobei das erste Datenheterogenitätsniveau auf mindestens einer von einer Varianz und einer Dispersion unter Modellparameteraktualisierungen basiert, die von einer ersten Client-Vorrichtung und einer zweiten Client-Vorrichtung empfangen werden;
Bestimmen (904), basierend auf dem ersten Datenheterogenitätsniveau, einer ersten Datenaggregationsperiode zum Konfigurieren einer Anzahl von Trainingszyklen zum Trainieren des Maschinenlernmodells oder einer Anzahl von Aggregationszyklen, wobei die Anzahl von Trainingszyklen oder die Anzahl von Aggregationszyklen einer Kommunikationsrunde zugeordnet sind;
Erhalten (906) eines ersten Satzes aktualisierter Modellparameter von der ersten Client-Vorrichtung und eines zweiten Satzes aktualisierter Modellparameter von der zweiten Client-Vorrichtung, wobei der erste Satz aktualisierter Modellparameter und der zweite Satz aktualisierter Modellparameter auf der ersten Datenaggregationsperiode basieren; und
Kombinieren (908) des ersten Satzes aktualisierter Modellparameter und des zweiten Satzes aktualisierter Modellparameter, um einen ersten kombinierten Satz aktualisierter Modellparameter zu ergeben.

2. Verfahren nach Anspruch 1, wobei die erste Datenaggregationsperiode einer Anzahl von Maschinenlerntrainingszyklen entspricht, die von einer Client-Vorrichtung pro Kommunikationsrunde durchgeführt werden; oder
wobei die erste Datenaggregationsperiode einer Anzahl von Aggregationszyklen entspricht, die von einer Netzwerkentität pro Kommunikationsrunde durchgeführt werden.

3. Verfahren nach einem der Ansprüche 1 oder 2, ferner umfassend:
Bestimmen, dass ein zweites Datenheterogenitätsniveau, das Eingabedaten zum Trainieren des Maschinenlernmodells zugeordnet ist, geringer ist als das erste Datenheterogenitätsniveau, wobei das zweite Datenheterogenitätsniveau auf mindestens einer von einer Varianz und einer Dispersion unter Modellparameteraktualisierungen basiert, die von der ersten Netzwerkentität empfangen werden; und
Bestimmen, basierend auf dem zweiten Datenheterogenitätsniveau, einer zweiten Datenaggregationsperiode zum Trainieren des Maschinenlernmodells, wobei die zweite Datenaggregationsperiode größer ist als die erste Datenaggregationsperiode.

4. Verfahren nach einem der Ansprüche 1 bis 3, ferner umfassend:
Senden des ersten Satzes aktualisierter Modellparameter und des zweiten Satzes aktualisierter Modellparameter an eine zweite Netzwerkentität; und
Empfangen eines ersten decodierten Satzes aktualisierter Modellparameter und eines zweiten decodierten Satzes aktualisierter Modellparameter von der zweiten Netzwerkentität.

5. Verfahren nach Anspruch 4, wobei die erste Netzwerkentität einer Funkeinheit, RU, entspricht und die zweite Netzwerkentität einer verteilten Einheit, DU, entspricht.

6. Verfahren nach einem der Ansprüche 1 bis 5, ferner umfassend:
Senden des ersten kombinierten Satzes aktualisierter Modellparameter an eine zweite Netzwerkentität, wobei die zweite Netzwerkentität der ersten Netzwerkentität vorgeschaltet ist.

7. Verfahren nach einem der Ansprüche 1 bis 6, wobei das Kombinieren des ersten Satzes aktualisierter Modellparameter und des zweiten Satzes aktualisierter Modellparameter umfasst:
Mitteln des ersten Satzes aktualisierter Modellparameter und des zweiten Satzes aktualisierter Modellparameter.

8. Verfahren nach einem der Ansprüche 1 bis 7, wobei der erste Satz aktualisierter Modellparameter und der zweite Satz aktualisierter Modellparameter über die Luft unter Verwendung eines gleichen gemeinsam genutzten Kanals kombiniert werden.

9. Verfahren nach einem der Ansprüche 1 bis 8, wobei die Eingabedaten Daten entsprechen, die nicht unabhängig und identisch verteilt sind.

10. Verfahren nach einem der Ansprüche 1 bis 9, wobei der erste Satz aktualisierter Modellparameter und der zweite Satz aktualisierter Modellparameter einer einzelnen Schicht einer Vielzahl von Schichten des Maschinenlernmodells entsprechen.

11. Verfahren nach einem der Ansprüche 1 bis 10, ferner umfassend:
Aktualisieren des Maschinenlernmodells basierend auf dem ersten kombinierten Satz aktualisierter Modellparameter, um ein modifiziertes Maschinenlernmodell zu ergeben.

12. Vorrichtung zur drahtlosen Kommunikation, die als eine Netzwerkentität in einem disaggregierten Funkzugangsnetzwerk, RAN, konfiguriert ist, umfassend:
Mittel zum Bestimmen eines ersten Datenheterogenitätsniveaus, das Mitteln zum Eingeben von Daten zum Trainieren eines Maschinenlernmodells zugeordnet ist, wobei das erste Datenheterogenitätsniveau auf mindestens einer von einer Varianz und einer Dispersion unter Modellparameteraktualisierungen basiert, die von einer ersten Client-Vorrichtung und einer zweiten Client-Vorrichtung empfangen werden;
Mittel zum Bestimmen, basierend auf dem ersten Datenheterogenitätsniveau, einer ersten Datenaggregationsperiode zum Konfigurieren einer Anzahl von Trainingszyklen zum Trainieren des Maschinenlernmodells oder einer Anzahl von Aggregationszyklen, wobei die Anzahl von Trainingszyklen oder die Anzahl von Aggregationszyklen einer Kommunikationsrunde zugeordnet sind;
Mittel zum Erhalten eines ersten Satzes aktualisierter Modellparameter von der ersten Client-Vorrichtung und eines zweiten Satzes aktualisierter Modellparameter von der zweiten Client-Vorrichtung, wobei der erste Satz aktualisierter Modellparameter und der zweite Satz aktualisierter Modellparameter auf der ersten Datenaggregationsperiode basieren; und
Mittel zum Kombinieren des ersten Satzes aktualisierter Modellparameter und des zweiten Satzes aktualisierter Modellparameter, um einen ersten kombinierten Satz aktualisierter Modellparameter zu ergeben.

13. Vorrichtung nach Anspruch 12, ferner umfassend Mittel zum Ausführen des Verfahrens nach einem der Ansprüche 2-11.

14. Computerprogramm, umfassend Anweisungen, die, wenn sie von einem Computer ausgeführt werden, den Computer veranlassen, das Verfahren nach einem der Ansprüche 2-11 durchzuführen.

## Revendications

1. Un procédé de réalisation d'un apprentissage fédéré au niveau d'une première entité de réseau dans un réseau d'accès radio, RAN, désagrégé, comprenant :
la détermination (902) d'un premier niveau d'hétérogénéité de données associé à des données d'entrée pour l'entraînement d'un modèle d'apprentissage machine, dans lequel le premier niveau d'hétérogénéité de données est basé sur au moins l'une parmi une variance et une dispersion parmi des mises à jour de paramètres de modèle reçues à partir d'un premier dispositif client et d'un second dispositif client ;
la détermination (904), sur la base du premier niveau d'hétérogénéité de données, d'une première période d'agrégation de données pour configurer un nombre de cycles d'entraînement pour l'entraînement du modèle d'apprentissage machine ou un nombre de cycles d'agrégation, dans lequel le nombre de cycles d'entraînement ou le nombre de cycles d'agrégation sont associés à un tour de communication ;
l'obtention (906) d'un premier ensemble de paramètres de modèle mis à jour à partir du premier dispositif client et d'un second ensemble de paramètres de modèle mis à jour à partir du second dispositif client, dans lequel le premier ensemble de paramètres de modèle mis à jour et le second ensemble de paramètres de modèle mis à jour sont basés sur la première période d'agrégation de données ; et
la combinaison (908) du premier ensemble de paramètres de modèle mis à jour et du second ensemble de paramètres de modèle mis à jour pour produire un premier ensemble combiné de paramètres de modèle mis à jour.

2. Le procédé selon la revendication 1, dans lequel la première période d'agrégation de données correspond à un nombre de cycles d'apprentissage machine effectués par un dispositif client par tour de communication ; ou
dans lequel la première période d'agrégation de données correspond à un nombre de cycles d'agrégation effectués par une entité de réseau par tour de communication.

3. Le procédé selon l'une des revendications 1 ou 2, comprenant en outre :
la détermination qu'un second niveau d'hétérogénéité de données associé à des données d'entrée pour l'entraînement du modèle d'apprentissage machine est inférieur au premier niveau d'hétérogénéité de données, dans lequel le second niveau d'hétérogénéité de données est basé sur au moins l'une parmi une variance et une dispersion parmi des mises à jour de paramètres de modèle reçues par la première entité de réseau ; et
la détermination, sur la base du second niveau d'hétérogénéité de données, d'une seconde période d'agrégation de données pour l'entraînement du modèle d'apprentissage machine, dans lequel la second période d'agrégation de données est supérieure à la première période d'agrégation de données.

4. Le procédé selon l'une des revendications 1 à 3, comprenant en outre :
l'envoi du premier ensemble de paramètres de modèle mis à jour et du second ensemble de paramètres de modèle mis à jour à une seconde entité de réseau ; et
la réception d'un premier ensemble décodé de paramètres de modèle mis à jour et d'un second ensemble décodé de paramètres de modèle mis à jour à partir de la seconde entité de réseau.

5. Le procédé selon la revendication 4, dans lequel la première entité de réseau correspond à une unité radio, RU, et la seconde entité de réseau correspond à une unité distribuée, DU.

6. Le procédé selon l'une des revendications 1 à 5, comprenant en outre :
l'envoi du premier ensemble combiné de paramètres de modèle mis à jour à une seconde entité de réseau, dans lequel la seconde entité de réseau est en amont de la première entité de réseau.

7. Le procédé selon l'une des revendications 1 à 6, dans lequel la combinaison du premier ensemble de paramètres de modèle mis à jour et du second ensemble de paramètres de modèle mis à jour comprend :
l'établissement de la moyenne du premier ensemble de paramètres de modèle mis à jour et du second ensemble de paramètres de modèle mis à jour.

8. Le procédé selon l'une des revendications 1 à 7, dans lequel le premier ensemble de paramètres de modèle mis à jour et le second ensemble de paramètres de modèle mis à jour sont combinés over-the-air en utilisant un même canal partagé.

9. Le procédé selon l'une des revendications 1 à 8, dans lequel les données d'entrée correspondent à des données qui ne sont pas distribuées de manière indépendante et identique.

10. Le procédé selon l'une des revendications 1 à 9, dans lequel le premier ensemble de paramètres de modèle mis à jour et le second ensemble de paramètres de modèle mis à jour correspondent à une seule couche d'une pluralité de couches du modèle d'apprentissage machine.

11. Le procédé selon l'une des revendications 1 à 10, comprenant en outre :
la mise à jour du modèle d'apprentissage machine sur la base du premier ensemble combiné de paramètres de modèle mis à jour pour produire un modèle d'apprentissage machine modifié.

12. Un appareil pour la communication sans fil configuré en tant qu'entité de réseau dans un réseau d'accès radio, RAN, désagrégé, comprenant :
un moyen pour déterminer un premier niveau d'hétérogénéité de données associé à un moyen pour entrer des données pour l'entraînement d'un modèle d'apprentissage machine, dans lequel le premier niveau d'hétérogénéité de données est basé sur au moins l'une parmi une variance et une dispersion parmi des mises à jour de paramètres de modèle reçues à partir d'un premier dispositif client et d'un second dispositif client ;
un moyen pour déterminer, sur la base du premier niveau d'hétérogénéité de données, une première période d'agrégation de données pour configurer un nombre de cycles d'entraînement pour l'entraînement du modèle d'apprentissage machine ou un nombre de cycles d'agrégation, dans lequel le nombre de cycles d'entraînement ou le nombre de cycles d'agrégation sont associés à un tour de communication ;
un moyen pour obtenir un premier ensemble de paramètres de modèle mis à jour à partir du premier dispositif client et d'un second ensemble de paramètres de modèle mis à jour à partir du second dispositif client, dans lequel le premier ensemble de paramètres de modèle mis à jour et le second ensemble de paramètres de modèle mis à jour sont basés sur la première période d'agrégation de données ; et
un moyen pour combiner le premier ensemble de paramètres de modèle mis à jour et le second ensemble de paramètres de modèle mis à jour pour produire un premier ensemble combiné de paramètres de modèle mis à jour.

13. L'appareil selon la revendication 12, comprenant en outre des moyens pour réaliser le procédé selon l'une des revendications 2 à 11.

14. Un programme de calculateur comprenant des instructions qui, lorsqu'elles sont exécutées par un calculateur, amènent le calculateur à réaliser le procédé selon l'une des revendications 2 à 11.
